(19) Europäisches Patentamt
European Patent Office
Office européen des brevets

(11) EP 4 444 783 B1

(12) **EUROPEAN PATENT SPECIFICATION**

(45) Date of publication and mention of the grant of the patent:
**28.01.2026 Bulletin 2026/05**

(21) Application number: **22830512.4**

(22) Date of filing: **06.12.2022**

(51) International Patent Classification (IPC):
***C08G 63/181*** *(2006.01)* ***C08G 63/183*** *(2006.01)*
***C08G 63/20*** *(2006.01)* ***C08G 63/85*** *(2006.01)*
***C08G 63/87*** *(2006.01)* ***C08J 5/18*** *(2006.01)*
***C09D 167/02*** *(2006.01)*

(52) Cooperative Patent Classification (CPC):
(C-Sets available)
**C08G 63/181; C08G 63/183; C08G 63/20; C08G 63/85; C08G 63/87; C08J 5/18; C09D 167/02;** C08J 2367/02; C08J 2403/00; C08J 2403/02; C08J 2467/04 (Cont.)

(86) International application number:
**PCT/EP2022/084527**

(87) International publication number:
**WO 2023/104769 (15.06.2023 Gazette 2023/24)**

(54) **MIXED ALIPHATIC-AROMATIC POLYESTERS**

GEMISCHTE ALIPHATISCH-AROMATISCHE POLYESTER

POLYESTERS ALIPHATIQUES-AROMATIQUES MIXTES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.12.2021 IT 202100030746**

(43) Date of publication of application:
**16.10.2024 Bulletin 2024/42**

(73) Proprietor: **Novamont S.p.A.**
**28100 Novara (IT)**

(72) Inventors:
- **BASTIOLI, Catia**
  **28100 Novara (IT)**
- **GESTI GARCIA, Sebastià**
  **10100 Torino (IT)**
- **VALLERO, Roberto**
  **13040 Borgo D'Ale (VC) (IT)**

(74) Representative: **Zanoli, Enrico et al**
**Zanoli & Giavarini S.p.A.**
**Via Melchiorre Gioia, 64**
**20125 Milano (IT)**

(56) References cited:
**WO-A1-00/46271** **WO-A1-2018/158269**
**WO-A1-2020/216803** **WO-A1-2020/234293**
**WO-A1-2021/209369**

- **PAN CHENGQIAN ET AL: "Effect of Monomer Structure on Crystallization and Glass Transition of Flexible Copolyesters", JOURNAL OF POLYMERS AND THE ENVIRONMENT, SPRINGER NEW YORK LLC, US, vol. 25, no. 4, 3 November 2016 (2016-11-03), pages 1051 - 1061, XP036364919, ISSN: 1566-2543, [retrieved on 20161103], DOI: 10.1007/S10924-016-0881-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 444 783 B1

(52) Cooperative Patent Classification (CPC): (Cont.)

C-Sets
**C08L 67/02, C08L 1/00;**
**C08L 67/02, C08L 3/00;**
**C08L 67/02, C08L 3/00, C08L 67/04;**
**C08L 67/02, C08L 3/00, C08L 67/04, C08K 3/013;**
**C08L 67/02, C08L 5/00**

## Description

### TECHNICAL FIELD

The present invention relates to mixed aliphatic-aromatic polyesters having suitable thermal properties and terminal acidity characterised by having a dicarboxylic component comprising at least three saturated aliphatic C4-C24 dicarboxylic acids, their C1-C24 alkyl esters, their salts and their mixtures, azelaic acid and succinic acid always being present.

### PRIOR ART

It is known that the use of biodegradable polymers instead of non-biodegradable polymers has become a promising and indispensable way to avoid unbearable environmental damage.

Of course biodegradable polymers must have excellent processability and excellent thermal and mechanical properties to be able to be validly used in a wide variety of fields, such as for the production of films and/or containers. It is also known that it is particularly desirable for biodegradable aliphatic-aromatic polyesters produced from diacids and diols to have flexibility characteristics with a low glass transition temperature (Tg) and to have amorphous properties that offer improved chain flexibility in comparison with more crystalline products.

See for example the article by Pan et al., entitled 'Effect of Monomer Structure on Crystallisation and Glass Transition of Flexible Copolyesters' (J. Polym. Environ. (2017) 25:1051-1061).

Although Tg behaviour is known for various combinations of aliphatic-aromatic polyesters (see for example patent EP3240818B1), it is not easy to obtain polyesters having a lower glass transition temperature with all the advantages pointed out above.

WO 2020/216803 A1 discloses in claim 2 a biodegradable film obtained by a cold stretching process with a stretch of above 10%, said film comprising a starch-based composition containing at least one biodegradable aliphatic-aromatic dicarboxylic acid/diol polymer obtained from at least one diol, at least one aromatic acid with multiple functional groups and at least one aliphatic dicarboxylic acid, characterised in that the latter comprises 5 to 100% by mole of at least one long-chain dicarboxylic acid selected from the group comprising azelaic acid, sebacic acid, brassylic acid, 1,16-hexadecandioic acid, 1,18-octadecandioic acid, their esters and their mixtures, and that the aromatic acid content is of from 40 to 70% by mole in relation to the total dicarboxylic acid content by mole.

It is also known that a content of residual mixed cyclic oligomers in aliphatic-aromatic polyesters is undesirable because such a content adversely influences the properties of the polyesters, in particular the mechanical performance and transparency properties of films obtained from them.

Patent application WO2016/050963 describes a combined process for the production of polyesters comprising an esterification or transesterification step and a subsequent polycondensation step, characterised in that said polycondensation step is carried out in the presence of a catalyst comprising a mixture of at least one compound comprising Titanium and at least one compound comprising Zirconium in which the Ti/(Ti+Zr) ratio by weight is equal to or over 0.01 and below 0.70.

WO2016/050963 teaches that it is possible to obtain polyesters with reduced residual cyclic oligomer formation.

These residual cyclic oligomers are partly removed by distillation during the polycondensation step. However, some of these residual cyclic oligomers remain trapped within the polyester that is formed.

It has been found that by appropriately selecting the conditions of the process described in patent application WO2016/050963, in particular through additions of phosphorus-containing compounds in appropriate amounts relative to the catalyst used, together with specific temperature and pressure conditions, mixed aliphatic-aromatic polyesters with a controlled amount of residual mixed cyclic oligomers that succeed in inducing the desired decrease in glass transition temperature in the mixed aliphatic-aromatic polyesters according to the present invention can be obtained.

In the present invention, by "mixed aliphatic-aromatic polyesters" are meant aliphatic-aromatic polyesters having at least three saturated aliphatic dicarboxylic acids.

In the present invention, by "residual mixed cyclic oligomers" are meant those residual cyclic oligomers that remain in the polymer mass after the polycondensation process and have a molecular mass (MM) of below 1000.

### SUMMARY OF THE INVENTION

One aspect of the present invention comprises mixed aliphatic-aromatic polyesters comprising:

(a) a dicarboxylic component comprising:

(a1) 40 - 80% in moles of units derived from at least one aromatic dicarboxylic acid,

(a2) 20 - 60% in moles of units derived from at least three saturated aliphatic C4-C24 dicarboxylic acids, their C1-C24 alkyl esters, their salts and mixtures thereof, azelaic acid and succinic acid always being present.

(b) an aliphatic diol component;

Another aspect of the present invention is a film obtained from the mixed aliphatic aromatic polyesters described above, preferably in a mixture with other polymers and possibly other components.

DETAILED DESCRIPTION OF THE INVENTION

In a preferred aspect of the invention, the mixed aliphatic-aromatic polyesters are characterised in that they comprise a content of residual mixed cyclic oligomers of between 1.0% and 4.0%, in which said residual mixed cyclic oligomers are characterised by a ratio between the cyclic oligomers containing at least two types of aliphatic dicarboxylic units having an MM below 1000 and the cyclic oligomers containing only one type of aliphatic dicarboxylic unit having an MM below 1000 is between 0.30 and 1.40, more preferably between 0.40 and 1.20, even more preferably between 0.80 and 1.14, and further characterised in that the predominant saturated aliphatic dicarboxylic acid in component a2 is between 40% in moles and 92% in moles compared to the sum of all the other saturated aliphatic dicarboxylic acids.

The term "predominant saturated aliphatic dicarboxylic acid" in the present invention means that the term is applied when the ratio of the acids is not equimolecular, and thus the term designates the saturated aliphatic dicarboxylic acid present in a greater molar percentage than the percentage of each of the other saturated aliphatic dicarboxylic acids.

Advantageously, the content of residual mixed cyclic oligomers is between 2% and 3.5%.

As regards the mixed aliphatic-aromatic polyesters produced by the process according to the present invention, these comprise a diol component (component b) derived from at least one aliphatic diol selected from 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentylglycol, 2-methyl-1,3-propanediol, dianhydrosorbitol, dianhydromannitol, dianhydroiditol, glycols having a molecular weight of 100-4000, such as polyethylene glycol, polypropylene glycol, and mixtures thereof.

Preferably the diol component comprises at least 50% in moles of one or more diols selected from 1,2-ethanediol, 1,3-propanediol, 1,4-butanediol.

More preferably, the diol component comprises or consists of 1,2-ethanediol, 1,4-butanediol or mixtures thereof.

Even more preferably, the diol component comprises or consists of 1,4-butanediol.

The dicarboxylic component of the polyesters produced by the process according to the present invention comprises 40-80% in moles, preferably 40-75%, more preferably 42-52% in moles, even more preferably between 45 and 49% in moles with respect to the total dicarboxylic component, of units derived from at least one aromatic dicarboxylic acid (component a1) and 20-60% in moles, preferably 25-60% in moles, more preferably 48-58% in moles, more preferably between 51 and 55% in moles with respect to the total dicarboxylic component, of units derived from at least three saturated aliphatic dicarboxylic acids (component a2). The dicarboxylic component is further characterised in that the predominant saturated aliphatic dicarboxylic acid in component a2 is less than 92% in moles with respect to the sum of all the other saturated aliphatic dicarboxylic acids and greater than 40% in moles with respect to the sum of all the saturated aliphatic dicarboxylic acids.

The aromatic dicarboxylic acids are advantageously selected from terephthalic acid, isophthalic acid, 2,5-furandicarboxylic acid, their esters, salts and mixtures.

In a preferred embodiment, said aromatic dicarboxylic acids comprise:

- 1 to 99% in moles, preferably 5 to 95% and more preferably 10 to 80% of terephthalic acid, its esters or salts;
- 99 to 1% in moles, preferably 95 to 5% and more preferably 90 to 20% of 2,5-furandicarboxylic acid, its esters or salts.

In a particularly preferred form of the present invention, the aromatic dicarboxylic acid is terephthalic acid, its esters and salts.

With regard to component a2, the molar% of saturated aliphatic carboxylic acids of renewable origin is preferably over 30%, more preferably over 40%, even more advantageously over 50% of the total sum of the saturated dicarboxylic acids.

The succinic acid in component a2 is further characterised by being between 5% and 67% in moles of the sum of all the other saturated aliphatic dicarboxylic acids, preferably between 10% in moles and 50%, even more preferably between 20% and 35% in moles of the sum of all the other saturated aliphatic dicarboxylic acids

The azelaic acid in component a2 is preferably between 3% in moles and 92%, preferably between 10% in moles and 50%, even more preferably between 15% and 35% in moles with respect to the sum of all the other saturated aliphatic dicarboxylic acids.

The aliphatic dicarboxylic acids are advantageously selected from saturated C4-C24, preferably C4-C13, more preferably C4-C11, aliphatic dicarboxylic acids, their C1-C24, preferably C1-C4 alkyl esters, their salts and mixtures thereof.

In a preferred embodiment of this invention, the aliphatic dicarboxylic acids are selected from succinic acid, glutaric acid, 2-methylglutaric acid, adipic acid, pimelic acid, suberic acid, azelaic acid, sebacic acid, undecandioic acid, dodecandioic acid, brassylic acid and their C1-24 alkyl esters.

In a preferred embodiment of this invention, the predominant saturated aliphatic dicarboxylic acid is at least 40% in moles, preferably more than 60% in moles, more preferably more than 65% in moles, even more preferably more than 85% in moles with respect to the sum of all the saturated aliphatic dicarboxylic acids. Said predominant saturated aliphatic dicarboxylic acid is preferably selected from succinic acid, adipic acid, azelaic acid, sebacic acid, brassylic acid, their C1-C24, preferably C1-C4 esters, their salts and mixtures thereof, succinic acid and azelaic acid always however being present.

In a preferred embodiment of the process according to the present invention, the mixed aliphatic-aromatic polyesters produced are advantageously selected from:

(A) polyesters comprising repetitive units derived from phthalic type aromatic dicarboxylic acids, preferably terephthalic acid, aromatic dicarboxylic acids and aliphatic diols (AAPE-A), characterised by an aromatic unit content of between 42 and 60% in moles, preferably between 45 and 49.5% in moles, with respect to the total moles of the dicarboxylic component.
The AAPE-A polyesters are preferably selected from: poly(1,4-butylene azelate-co-1,4-butylene succinate-co-1,4-butylene adipate-co-1,4-butylene terephthalate), poly(1,4-butylene azelate-co-1,4-butylene succinate-co-1,4-butylene sebacate-co-1,4-butylene terephthalate), poly(1,4-butylene azelate-co-1,4-butylene succinate-co-1,4-butylene brassylate-co-1,4-butylene terephthalate), poly(1,4-butylene azelate-co-1,4-butylene succinate co-1,4-butylene adipate -co-1,4-butylene sebacate-co-1,4-butylene terephthalate), poly(1,4-butylene azelate-co-1,4-butylene succinate-co-1,4-butylene adipate-co-1,4-butylene brassylate-co-1,4-butylene terephthalate), poly(1,4-butylene azelate-co-1,4-butylene succinate-co-1,4-butylene brassylate-co-1,4-butylene sebacate-co-1,4-butylene terephthalate), poly(1,4-butylene azelate-co-1,4-butylene succinate-co-1,4-butylene adipate-co-1,4-butylene sebacate-co-1,4-butylene brassylate-co-1,4-butylene terephthalate).
(B) polyesters comprising repeating units derived from aromatic heterocyclic dicarboxylic compounds, preferably 2,5-furandicarboxylic acid, aromatic dicarboxylic acids and aliphatic diols (AAPE-B), characterised by a content of aromatic units between 40 and 80% in moles, preferably between 40 and 75% in moles, with respect to the total moles of the dicarboxylic component.

The AAPE-B polyesters are preferably selected from: poly(1,4-butylene azelate-co-1,4-butylene succinate-co-1,4-butylene adipate-co-2,5-furandicarboxylate), poly(1,4-butylene azelate-co-1,4-butylene succinate-co-1,4-butylene sebacate-co-2,5-furandicarboxylate), poly(1,4-butylene azelate-co-1,4-butylene succinate-co-1,4-butylene brassylate-co-2,5-furandicarboxylate), poly(1,4-butylene azelate-co-1,4-butylene succinate-co-1,4-butylene adipate-co-1,4-butylene sebacate-co-2,5-furandicarboxylate), poly(1,4-butylene azelate-co-1,4-butylene succinate-co-1,4-butylene adipate-co-1,4-butylene brassylate-co-2,5-furan-dicarboxylate), poly(1,4-butylene azelate-co-1,4-butylene succinate-co-1,4-butylene brassylate-co-1,4-butylene sebacate-co-2,5-furandicarboxylate), poly(1,4-butylene azelate-co-1,4-butylene succinate-co-1,4-butylene adipate-co-1,4-butylene sebacate-co-1,4-butylene brassylate-co-2,5-furandicarboxylate).

In a preferred aspect of the invention the polyesters produced by the process according to the present invention are characterised by a content of residual mixed cyclic oligomers of between 1.0% and 4.0%, in which said oligomers are characterised by a ratio between the cyclic oligomers containing at least two types of aliphatic dicarboxylic units having an MM below 1000 and the cyclic oligomers containing only one type of aliphatic dicarboxylic unit having an MM below 1000 of between 0.30 and 1.40, more preferably between 0.40 and 1.20, even more preferably between 0.81 and 1.14, and further characterised in that the predominant saturated aliphatic dicarboxylic acid in component a2 is less than 92% in moles with respect to the sum of all the other saturated aliphatic dicarboxylic acids and greater than 40% in moles with respect to the sum of all the other saturated aliphatic dicarboxylic acids.

In a preferred aspect of the present invention, the cyclic oligomers containing only one type of aliphatic dicarboxylic unit are (ADA-BDO)2, (AZA-BDO)2, (SEBA-BDO)2, (BRA-BDO)2, (SUC-BDO)2, (ADA-BDO)3, (AZA-BDO)3, (SEBA-BDO)3, (BRA-BDO)3, (SUC-BDO)3, (ADA-BDO)4, (AZA-BDO)4, (SUC-BDO)4.

In a preferred aspect of the present invention, the cyclic oligomers containing at least two types of aliphatic dicarboxylic units are (ADA-BDO-AZA-BDO), (ADA-BDO-SEBA-BDO), (ADA-BDO-BRA-BDO) (ADA-BDO-SUC-BDO), (AZA-BDO-SEBA-BDO), (AZA-BDO-BRA-BDO), (AZA-BDO-SUC-BDO), (SEBA-BDO-BRA-BDO), (SEBA-BDO-SUC-BDO), (SUC-BDO-BRA-BDO), (ADA-BDO)2-(AZA-BDO), (ADA-BDO)-(AZA-BDO)2, (ADA-BDO)2-(SEBA-BDO), (ADA-BDO)-(SEBA-BDO)2, (ADA-BDO)2-(BRA-BDO), (ADA-BDO)-(BRA-BDO)2, (ADA-BDO)2-(SUC-BDO), (ADA-BDO)-(SUC-BDO)2, (AZA-BDO)2-(SUC-BDO), (AZA-BDO)-(SUC-BDO)2, (SEB-BDO)2-(SUC-BDO), (SEB-BDO)-(SUC-BDO)2, (BRA-BDO)2-(SUC-BDO), (BRA-BDO)-(SUC-BDO)2, (AZA-BDO)2-(SEBA-BDO), (AZA-BDO)-(SEBA-BDO)2, (AZA-BDO)2-(BRA-BDO), (AZA-BDO)-(BRA-BDO)2, (SEBA-BDO)2-(BRA-BDO), (SEBA-BDO)-(BRA-BDO)2, (ADA-BDO)-(PTA-BDO)-(AZ-BDO), (ADA-BDO)-(PTA-BDO)-(SEBA-BDO), (ADA-BDO)-(PTA-BDO)-(BRA-BDO), (SEBA-BDO)-(PTA-BDO)-(AZ-BDO) (BRA-BDO)-(PTA-BDO)-(AZ-BDO), (BRA-BDO)-(PTA-BDO)-(SEBA-BDO), (ADA-BDO)-(PTA-BDO)-(SUC-BDO), (AZA-BDO)-(PTA-BDO)-(SUC-BDO), (SEB-BDO)-(PTA-BDO)-(SUC-BDO), (BRA-BDO)-(PTA-BDO)-(SUC-BDO), (ADA-BDO)-(AZA-BDO)-(SEBA-BDO), (ADA-BDO)-(AZA-BDO)-(BRA-BDO), (ADA-BDO)-(BRA-BDO)-(SEBA-BDO), (BRA-BDO)-(AZA-BDO)-(SEBA-BDO), (ADA-BDO)-(AZA-BDO)-(SUC-BDO), (SEBA-BDO)-(AZA-BDO)-(SUC-BDO), (BRA-BDO)-(AZA-BDO)-(SUC-BDO), (SEBA-BDO)-(BRA-BDO)-(SUC-BDO), (SEBA-BDO)-(ADA-BDO)-(SUC-BDO), (ADA-BDO)2-(AZA-BDO)2, (ADA-BDO)2-(SEBA-BDO)2, (ADA-BDO)2-(BRA-BDO)2; where ADA is the ester of adipic acid with the diol component, AZA is the ester of azelaic acid with the diol component, SUC is the ester of succinic acid with the diol component, SEBA is the ester of sebacic acid with the diol component, BRA is the ester of brassylic acid with the diol component, PTA is the ester of terephthalic acid and BDO is the diol component 1,4-butanediol.

As an example, the cyclic oligomer (SUC-BDO-AZA-BDO) consists of a butylene succinate unit and a butylene azelate unit.

In addition to the dicarboxylic component and the diol component, the mixed aliphatic-aromatic polyesters according to the present invention preferably comprise repeating units derived from at least one hydroxyacid or the corresponding lactone in amounts between 0 and 49%, preferably between 0 and 30% in moles, with respect to the total moles of the dicarboxylic component.

Examples of suitable hydroxy acids are glycolic acid or glycolide, hydroxybutyric acid, hydroxycaproic acid, hydroxyvaleric acid, 7-hydroxyheptanoic acid, 8-hydroxycaproic acid, 9-hydroxynonanoic acid, lactic acid or lactides.

Hydroxy acids may be inserted into the chain as they are or they may also be reacted with the diacids or diols in advance.

The mixed aliphatic-aromatic polyesters are produced in the following process which comprises the following stages:

1. subjecting a mixture comprising an aliphatic diol, at least one aromatic dicarboxylic acid and at least three saturated aliphatic dicarboxylic acids, their esters, salts or derivatives to esterification and/or trans-esterification to produce an oligomer;
2. polycondensing said oligomer obtained from step 1 at a temperature of between 220°C and 260°C and a pressure of between 50 Pa (0.5 mbar) and 35000 Pa (350 mbar) in the presence of a catalyst possibly comprising zirconium or mixtures thereof and a phosphorus-containing compound belonging to the family of organic phosphates or phosphites.

Advantageously, the compound containing phosphorus is selected from compounds of general formula (1) or (2)

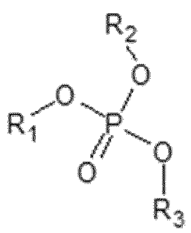

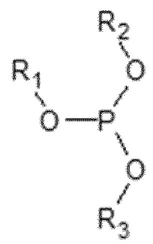

(1) (2)

where R1, R2 and R3 may be selected from any of H, C1-C20 alkyl or cycloalkyl, C6-C20 aryl, alkyl aryl, or a polyalkylene oxide or polyalkylalkylene oxide chain.

The catalyst comprises a mixture of at least one compound containing titanium and the ratio of titanium to phosphorus is between 2 and 20, preferably between 3 and 15.

In the process for preparing mixed aliphatic-aromatic polyesters according to the present invention, the hydroxy acids are advantageously added during the esterification step.

Long molecules with two functional groups, including those with non-terminal functional groups, may also be present in quantities of no more than 10% in moles with respect to the total moles of the dicarboxylic component.

Examples are dimer acids, ricinoleic acids and acids incorporating epoxy functional groups, and also polyoxyethylene with a molecular weight of between 200 and 10000.

In the process for preparing mixed aliphatic-aromatic polyesters according to the present invention these long molecules with two functional groups are advantageously added during the esterification step.

Diamines, amino acids and amino-alcohols may also be present in percentages of up to 30% in moles of the total moles of the dicarboxylic component.

In the process for preparing mixed aliphatic-aromatic polyesters according to the present invention, such diamines, amino acids and amino alcohols are advantageously added during the esterification step.

During the esterification step of the process for the preparation of mixed aliphatic-aromatic polyesters according to the present invention, one or more molecules characterised by having 3 or more reactive functional groups may be added in quantities of between 0.02 and 3% in moles with respect to the total moles of the dicarboxylic component (and any hydroxy acids) to obtain branched products.

Examples of these molecules are glycerol, pentaerythritol, trimethylolpropane, citric acid, dipentaerythritol, monoanhydrosorbitol, monoanhydromannitol, acid triglycerides or polyglycerols.

The molecular weight Mn of the mixed aromatic aliphatic polyesters according to the present invention is preferably greater than 20000, more preferably >30000, even more preferably >50000.

With regard to the polydispersity index for the molecular weights Mw/Mn, this is preferably between 1.5 and 10, more preferably between 1.6 and 5, and even more preferably between 1.8 and 2.5.

The molecular weights Mn and Mw may be measured by gel permeation chromatography (GPC).

The determination can be conducted with the chromatographic system maintained at 40 °C, using a set of two columns in series (particle diameters of 5 μm and 3 μm with mixed porosity), a refractive index detector, chloroform as eluent (flow rate 0.5 ml/min) and using polystyrene as reference standard.

The thermal properties of mixed aromatic aliphatic polyesters according to the present invention have been determined by differential scanning calorimetry (DSC) using a Perkin Elmer Pyris Diamond calorimeter under the conditions given below:

- 60 sec isotherm at -80°C
- 1st scan from -80°C to 200°C at 20°C/min
- 60 sec isotherm at 200°C
- 2nd scan from 200°C to -80°C at 10°C/min
- 60 sec isotherm at -80°C
- 3rd scan from -80°C to 200°C at 20°C/min

At the glass transition temperature there is a change in specific heat (ΔCp) which can be detected as a jump and a change in the slope of the DSC curve. The glass transition temperature (Tg) has been calculated from the second scan by drawing two lines that ideally continue the baseline before and after the transition and the tangent to the point of maximum slope of the curve using Perkin Elmer's Pyris™ software, specially designed to process DSC diagrams. Glass transition temperature in the present invention is defined as the point at which half of the heat capacity increase is reached (*midpoint* temperature).

In the process in patent WO2016/050963, through the use of the catalyst comprising a mixture of at least one compound comprising Titanium and at least one compound comprising Zirconium, in which the Ti/(Ti+Zr) ratio by weight in the polycondensation step is above 0.01 and below 0.70, preferably above 0.02 and below 0.60, a lower amount of residual cyclic oligomers can be obtained after extraction of the polycondensation distillates.

In particular the content of these residual cyclic oligomers is measured gravimetrically after isolation from the polycondensation distillates.

Instead, in the present invention, by using phosphorus-containing compounds in a mixture of at least one compound comprising titanium with a titanium to phosphorus ratio of between 2 and 20, preferably between 3 and 15, it is possible to control the amount of residual mixed cyclic oligomers remaining within the formed polyester, where the ratio of cyclic oligomers containing at least two types of dicarboxylic aliphatic unit having an MM below 1000 to cyclic oligomers containing only one type of dicarboxylic aliphatic unit having an MM below 1000 is between 0.30 and 1.40.

The residual mixed cyclic oligomers extracted are determined gravimetrically.

An accurately weighed polymer sample of about 30 g was extracted with 150ml acetonitrile at 40°C over 96 hours. The liquid phase was recovered by filtration and the granules on the filter were washed with 25ml of acetonitrile. The two aliquots of liquid were combined in a 250ml volumetric flask and the solvent was evaporated to constant weight in a rotary evaporator at 45°C. The composition of the residual mixed cyclic oligomers was analysed by dissolving the oligomers in 1ml of THF, diluting with acetonitrile to a concentration of approximately 1000ppm. 100μl of the acetonitrile/THF solution was diluted with 800μl of methanol and 100μl of a 0.1% N aqueous solution of ammonium acetate.

The analysis was performed by HPLC-MS using a Thermo Accela 1250 HPLC instrument interfaced with a Thermo LCQ Fleet mass spectrometer in ESI+ mode.

Species were separated using a Phenomenex Luna Omega C18 PS 100x2.1mm 1.6um column eluting

according to the profile described in Table 1.

Table 1: Elution profile

| Time | % Acetonitrile | % 0.1% N aqueous solution of ammonium acetate | l/min |
|---|---|---|---|
| 0 | 30 | 70 | 300 |
| 2 | 30 | 70 | 300 |
| 50 | 95 | 5 | 300 |
| 60 | 95 | 5 | 300 |
| 65 | 30 | 70 | 300 |
| 70 | 30 | 70 | 300 |

The oligomers were recognised on the basis of the molecular mass (MM) of the protonated and ammonia adducts. The percentage of residual mixed cyclic oligomers was determined by processing the chromatogram in base peak mode and integrating the species recognised as cyclic oligomers on the basis of molecular mass. The ratio of the sum of the areas of the peaks assigned to oligomers containing at least 2 aliphatic acids having an MM below 1000 to the sum of the areas of the peaks assigned to cyclic oligomers containing only one type of aliphatic dicarboxylic unit having an MM below 1000 represents the fraction of mixed cyclic oligomers. The terminal acid group content of the mixed aromatic aliphatic polyester is preferably less than 100 meq/kg, preferably less than 60 meq/kg and even more preferably less than 40 meq/kg.

The content of terminal acid groups can be measured as follows: 1.5-3g of polyester is placed in a 100 ml flask together with 60 ml of chloroform.

After the polyester has completely dissolved, 25ml of 2-propanol is added and, immediately before analysis, 1 ml of deionised water.

The resulting solution is titrated against a previously standardised solution of KOH in ethanol. A suitable indicator, such as a glass electrode for acid-base titrations in non-aqueous solvents, is used to determine the end point of the titration.

The content of the terminal acid groups is calculated from the consumption of the KOH solution in ethanol according to the following equation:

$$\text{Terminal acid groups content (meq/kg of polymer)} = \frac{\left[\left(V_{eq} - V_b\right) \cdot T\right] \cdot 1000}{P}$$

in which: Veq = ml of KOH solution in ethanol at the end point in titration of the sample; Vb = ml of KOH solution in ethanol required to achieve a pH= 9.5 during a blank titration;

T = concentration of KOH solution in ethanol in moles/litre; P = weight of sample in grams. When used for applications typical of plastics (such as bubble film formation, injection moulding, foam products, etc.), the Melt Mass-Flow Rate (MFR) for the mixed aliphatic-aromatic polyesters according to the present invention is preferably between 500 and 1g/10 min, more preferably between 100 and 2g/10 min, even more preferably between 80 and 3g/10 min. An MFR of between 25 and 3.5g/10 min (measured at 190°C/2.16 kg according to ISO 1133-1) may advantageously be used.

Preferably, the mixed aliphatic-aromatic polyesters according to the present invention have an intrinsic viscosity (measured with a Ubbelohde viscometer for solutions in $CHCl_3$ at a concentration of 0.2g/dl at 25 °C) of more than 0.4, preferably between 0.4 and 2, more preferably between 0.7 and 1.5dl/g.

Preferably mixed aliphatic-aromatic polyesters according to the present invention are biodegradable.

In the meaning of the present invention, biodegradable polymers are understood to mean biodegradable polymers having a relative biodegradability of 90% or more with respect to microcrystalline cellulose after 180 days according to ISO 14855-1 (2013).

In a preferred aspect of the invention said mixed aliphatic-aromatic polyesters comprising between 45-49% in moles of the total dicarboxylic component, of units derived from at least one aromatic dicarboxylic acid (component a1), and 20-60% in moles of the total dicarboxylic component, of units derived from succinic acid, are biodegradable in industrial composting according to standard EN13432.

Preferably, the mixed aliphatic-aromatic polyesters according to the present invention can be used in a mixture with one or more polymers of synthetic or natural origin, whether biodegradable or not, which may also be obtained by reactive extrusion processes.

In particular, the mixed aliphatic aromatic polyesters according to the present invention are particularly suitable for the production of films when mixed with other polymers and preferably with a suitable combination of other components. Advantageously, such films exhibit excellent mechanical properties.

In a particularly preferred aspect of the invention, films made from mixtures of mixed aromatic aliphatic polyesters include:

i) 30-95% by weight, relative to the sum of components i.-v., of at least one mixed aliphatic aromatic polyester;
ii) 0.1-50% by weight, relative to the sum of components i.-v., of at least one polymer of natural origin;
iii) 0-40%, relative to the sum of components i.-v., of at least one polyhydroxyalkanoate;
iv) 0-15%, relative to the sum of components i.-v., of at least one inorganic filler;
v) 0-5% by weight, relative to the sum of components i.-v., of at least one cross-linking agent and/or chain extender comprising at least one di- and/or polyfunctional compound containing isocyanate, peroxide, carbodiimide, isocyanurate, oxazoline, epoxide, anhydride, divinyl ether and mixtures thereof.

The polymers of natural origin (component ii) are selected from the group comprising starch, cellulose, chitin, chitosan, alginates, proteins such as gluten, zein, casein, collagen, gelatin, natural gums, rosinic acid and its derivatives, lignins as such, or purified, hydrolysed, basified, etc., lignins or their derivatives.

Starches and cellulose may be modified, and these include starch or cellulose esters with a degree of substitution between 0.2 and 2.5, hydroxypropylated starches, starches modified with fatty chains, and cellophane.

Component (ii) is preferably starch.

The starch may be used in both destructured and gelatinised form or as a filler.

By destructured starch is meant the starch described in patents EP 0 118 240 and EP 0 327 505, in particular starch processed in such a way that it does not show the so-called 'Maltese crosses' under an optical microscope in polarised light and the so-called 'ghosts' under an optical microscope in phase contrast.

The starch may be the continuous or dispersed phase, or it may be in co-continuous form.

In the case of dispersed starch, the starch particle size is measured in cross-section with respect to the flow direction during extrusion, or in any case, with respect to the direction of film production.

The particle size of the starch is measured from the two-dimensional shape resulting from transverse cross-sectioning. The average starch particle size is calculated as the arithmetic mean of the particle size.

If the particle has a circular cross-section, the particle size corresponds to the diameter of the circle.

In the case of particles having an elliptical cross-section or otherwise similar to an ellipse, the particle size (d) is calculated using the formula:

$$d = \sqrt{d_1 \cdot d_2}$$

where d1 is the minor axis and d2 is the major axis of the ellipse to which the particle can be likened.

Starch particles are characterised by an arithmetic mean diameter of less than 1 micron and more preferably less than 0.5 μm measured as described above.

With regard to component iii of the film described above, it optionally comprises at least one polyhydroxyalkanoate preferably between 0 and 40%, more preferably between 2 and 37%, and even more preferably between 10 and 25% of the sum of components i.-v.

Said polyhydroxyalkanoate is most preferably selected from the group comprising polyesters of lactic acid, poly-ε-caprolactone, polyhydroxybutyrate, polyhydroxybutyrate-valerate, polyhydroxybutyrate-propanoate, polyhydroxybutyrate-hexanoate, polyhydroxybutyrate-decanoate, polyhydroxybutyrate-dodecanoate, polyhydroxybutyrate-hexadecanoate, polyhydroxybutyrate-octadecanoate, poly-3-hydroxybutyrate-4-hydroxybutyrate. Preferably said polyhydroxyalkanoate comprises at least 80% by weight of one or more polyesters of lactic acid.

In a preferred embodiment, the lactic acid polyesters are selected from the group comprising poly-L-lactic acid, poly-D-lactic acid, poly-DL-lactic acid stereo complex, copolymers comprising more than 50% in moles of said lactic acid polyesters or mixtures thereof. Particularly preferred are lactic acid polyesters containing at least 95% by weight of repetitive units derived from L-lactic or D-lactic acid or mixtures thereof, having a molecular weight Mw above 50000 and a shear viscosity between 50 and 500 Pa.s, preferably 100-300 Pa.s (measured according to ASTM standard D3835 at T = 190°C, shear rate = 1000 $s^{-1}$, D = 1 mm, L/D = 10). In a particularly preferred embodiment, the lactic acid polyester comprises at least 95% by weight of units derived from L-lactic acid, <5% repetitive units derived from D-lactic acid, has a melting point between 135 and 180°C, a glass transition temperature (Tg) in the range of 55-65°C and an MFR (measured according to ISO 1133-1 at 190°C and 2.16 kg) in the range of 1-50 g/10 min. Commercial examples of lactic acid polyesters with these properties include the biopolymer products Ingeo™ 4043D, 3250D and 6202D.

With regard to the inorganic filler (component iv) of the film described above, it is present between 0 and 15% by

weight, preferably between 0.1 and 8%, even more preferably between 3 and 5% relative to the sum of components i.-v. Said inorganic filler is preferably selected from kaolin, barytes, clay, talc, calcium and magnesium, calcium carbonate, iron and lead carbonates, aluminium hydroxide, kieselguhr, aluminium sulphate, barium sulphate, silica, mica, titanium dioxide and wollastonite.

In a preferred embodiment of the present invention, the inorganic filler comprises talc, mica, calcium carbonate or mixtures thereof, present in the form of particles having an average arithmetic diameter of less than 10 microns measured with respect to the major axis of the particles, more preferably having an average arithmetic diameter of less than 2 microns (measured according to ASTM 13320).

As far as the cross-linking agent and/or chain extender (component v) of the film described above is concerned, it is present from 0 to 5% by weight, preferably 0 to 0.5% by weight, relative to the sum of components i.-v.

Said crosslinking agent and/or chain extender is selected from di- and/or polyfunctional compounds bearing groups selected from isocyanate, peroxide, carbodiimide, isocyanurate, oxazoline, epoxy, anhydride or divinyl ether or mixtures thereof.

Especially preferred are mixtures of di- and/or polyfunctional compounds bearing isocyanate groups with di- and/or polyfunctional compounds bearing epoxide groups, even more preferably comprising at least 75% by weight of di- and/or polyfunctional compounds bearing isocyanate groups.

Compounds having two-functional and multifunctional groups including isocyanate groups are preferably selected from p-phenylene diisocyanate, 2,4-toluene diisocyanate, 2,6-toluene diisocyanate, 4,4-diphenylmethane diisocyanate, 1,3-phenylene-4-chloro diisocyanate, 1,5-naphthalene diisocyanate, 4,4-diphenylene diisocyanate, 3,3'-dimethyl-4,4-diphenylmethane diisocyanate, 3-methyl-4,4'-diphenylmethane diisocyanate, diphenyl ester diisocyanate, 2,4-cyclohexane diisocyanate, 2,3-cyclohexane diisocyanate, 1-methyl 2,4-cyclohexyl diisocyanate, 1-methyl- 2,6-cyclohexyl diisocyanate, bis-(isocyanate cyclohexyl) methane, 2,4,6-toluene triisocyanate, 2,4,4-diphenylether triisocyanate, polymethylene-polyphenyl-polyisocyanates, methylene diphenyl diisocyanate, triphenylmethane triisocyanate, 3,3'-dithiolylene-4,4-diisocyanate, 4,4'-methylenebis(2-methylphenyl isocyanate), hexamethylene-1,3-cyclohexylene diisocyanate, 1,2-cyclohexylene diisocyanate and mixtures thereof. In a preferred embodiment the compound containing isocyanate groups is 4,4-diphenylmethane-diisocyanate.

With regard to the di- and polyfunctional compounds bearing peroxide groups, these are preferably selected from benzoyl peroxide, lauroyl peroxide, isononanoyl peroxide, di-(t-butylperoxyisopropyl) benzene, t-butyl peroxide, dicumyl peroxide, alpha,alpha-di-(t-butylperoxy) diisopropylbenzene, 2,5-dimethyl-2,5-di(t-butylperoxy) hexane, t-butyl cumyl peroxide, di-t-butyl peroxide, 2,5-dimethyl-2,5-di(t-butylperoxy)hex-3-yne, di(4-t-butylcyclohexyl) peroxy dicarbonate, dicetyl peroxydicarbonate, dimyristyl peroxydicarbonate, 3,6,9-triethyl-3,6,9-trimethyl-1,4,7-triperoxonane, di(2-ethylhexyl) peroxydicarbonate and mixtures thereof.

The di- and polyfunctional compounds bearing carbodiimide groups which are preferably used in the composition according to the present invention are selected from poly(cyclooctylene carbodiimide), poly(1,4-dimethylenecyclohexylene carbodiimide), poly(cyclohexylene carbodiimide), poly(ethylene carbodiimide), poly(butylene carbodiimide), poly(isobutylene carbodiimide), poly(nonylene carbodiimide), poly(dodecylene carbodiimide), poly(neopentylene carbodiimide), poly(l, 4-dimethylene phenylene carbodiimide), poly(2, 2', 6,6'-tetraisopropyldiphenylene carbodiimide) (Stabaxol <®> D), poly(2,4,6-triisopropyl-1,3-phenylene carbodiimide) (Stabaxol <®> P-100), poly(2,6-diisopropyl-1,3-phenylene carbodiimide) (Stabaxol < ®> P), poly(tolyl carbodiimide), poly(4,4'- diphenylmethane carbodiimide), poly(3,3'-dimethyl-4,4'-biphenylene carbodiimide), poly(p-phenylene carbodiimide), poly(m-phenylene carbodiimide), poly(3,3'-dimethyl-4,4'- diphenylmethane carbodiimide), poly(naphthylene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12-decamethylene bis(ethylcarbodiimide) and mixtures thereof. Examples of di- and polyfunctional compounds bearing epoxide groups which may be advantageously used in the composition according to the present invention are all polyepoxides from epoxidised oils and/or from styrene-glycidyl ether-methyl methacrylate or glycidyl ether-methyl methacrylate included in a molecular weight range between 1000 and 10000 and having an epoxide number per molecule of between 1 and 30 and preferably between 5 and 25, the epoxides selected from the group comprising: diethylene glycol diglycidyl ether, polyethylene glycol diglycidyl ether, polyglycerol polyglycidyl ether, 2-epoxybutane, polyglycerol polyglycidyl ether, isoprene diepoxide and cycloaliphatic diepoxides, 1,4-cyclohexanedimethanol diglycidyl ether, glycidyl 2-methylphenyl ether, glycerol propoxylatotriglycidyl ether, glycerol propoxylatotriglycidyl ether, tetraglycidyl ethers of meta-xylene diamine and diglycidyl ethers of bisphenol A and mixtures thereof.

Along with di- and polyfunctional compounds bearing isocyanate, peroxide, carbodiimide, isocyanurate, oxazoline, epoxide, anhydride and divinyl ether groups such as those described above, catalysts may also be used to increase the reactivity of the reactive groups. In the case of polyepoxides, fatty acid salts can preferably be used, even more preferably calcium and zinc stearates.

In a particularly preferred embodiment of the invention, the crosslinking agent and/or chain extender comprises compounds bearing isocyanate groups, preferably 4,4-diphenylmethane-diisocyanate, and/or bearing carbodiimide

groups, and/or bearing epoxide groups, preferably of the styrene-glycidylether methylmethacrylate type.

In addition to film production, the mixed aliphatic-aromatic polyesters according to the present invention are extremely suitable for use alone or in mixtures with other polymers in many practical applications for the manufacture of products such as, for example, fibres, non-wovens, foils, printed matter, thermoformed, blown, expanded and laminated articles, including those made by the extrusion coating technique.

Examples of products comprising mixed aliphatic-aromatic polyesters according to the present invention are:

- films, with mono and biaxially oriented films, and multilayer films with other polymer materials;
- films for use in the agricultural sector as mulching film;
- stretch films, including thin film for food, baling in agriculture and waste packaging;
- bags and liners for the collection of organic material such as food waste and grass cuttings;
- thermoformed food packaging, both single-layer and multi-layer, such as containers for milk, yoghurt, meat, drinks, etc.
- coatings obtained using the extrusion coating technique;
- multilayer laminates with layers of cardboard, plastics, aluminium, metallised films;
- expanded or expandable beads for the production of special sintering formats;
- expanded and semi-expanded products including expanded blocks formed from pre-expanded particles;
- expanded foams, thermoformed expanded sheets and containers made therefrom for food packaging;
- containers in general for fruit and vegetables;
- compositions with gelatinised, de-structured and/or complex starch, natural starch, flours, other fillers of natural, vegetable or inorganic origin as fillers;
- fibres, microfibres, composite fibres with a core consisting of rigid polymers such as PLA, PET, PTT, etc., and an outer shell of the material according to the invention, dablens composite fibres, fibres having various cross-sections from round to multi-lobed fibre, flocked, woven and non-woven or spunbonded or thermobonded fabrics for the health, hygiene, agricultural and clothing sectors.

They may also be used in applications as a substitute for plasticised PVC.

The process for preparing the mixed aliphatic-aromatic polyesters according to the present invention comprises an esterification or transesterification stage and a polycondensation stage, and is characterised in that said polycondensation stage is carried out in the presence of a catalyst comprising at least one compound comprising titanium and possibly at least one compound comprising zirconium. When a compound comprising zirconium is present, the Ti/(Ti+Zr) ratio by weight is equal to or over 0.01 and equal to or below 0.7, preferably over 0.02 and equal to or below 0.60.

In addition, the catalyst is used in mixtures with phosphorus compounds belonging to the family of organic phosphates or phosphites.

Advantageously, the compound containing phosphorus is selected from compounds of general formula (1) or (2)

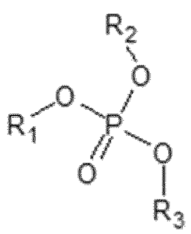

(1)

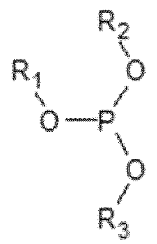

(2)

where R1, R2 and R3 may be selected from any of H, C1-C20 alkyl or cycloalkyl, C6-C20 aryl, alkyl aryl, or a polyalkyleneoxide or polyalkylalkyleneoxide chain.

In a particularly preferred aspect, the phosphorus-containing compound is trioctyl phosphate.

In a preferred aspect of the process, the catalyst comprises a mixture of at least one compound including titanium and the weight ratio of titanium to phosphorus is between 2 and 20, preferably between 3 and 15.

The esterification/transesterification stage is preferably fed with a molar ratio between aliphatic diols and dicarboxylic acids, their esters and salts, which is preferably between 1 and 2.5, preferably between 1.05 and 1.9.

The dicarboxylic acids, their esters or salts, aliphatic diols and any other co-monomers constituting the polyester may be fed to this stage separately, thus mixing in the reactor, or alternatively be pre-mixed, preferably at T < 70 °C, before being sent to the reactor.

It is also possible to pre-mix some of the components and subsequently change their composition, for example during the esterification/transesterification reaction.

In the case of polyesters in which the dicarboxylic component comprises repeating units derived from several dicarboxylic acids, whether aliphatic or aromatic, it is also possible to pre-mix some of these with aliphatic diols, preferably at T < 70°C, adding the remaining portion of the dicarboxylic acids, diols and any other co-monomers to the esterification/transesterification reactor.

The esterification/transesterification stage of this process is advantageously conducted at a temperature of 200-250°C and a pressure of 0.7-1.5 bar, preferably in the presence of an esterification/transesterification catalyst.

The esterification/transesterification catalyst, which may also advantageously be used as a component of the catalyst in the polycondensation stage, may in turn be fed directly to the esterification/transesterification reactor or may also first be dissolved in an aliquot of one or more of the dicarboxylic acids, their esters or salts, and/or aliphatic diols, in order to promote dispersion in the reaction mixture and make it more uniform.

The esterification/transesterification catalyst is selected from organometallic tin compounds, for example stannoic acid derivatives, titanium compounds, for example titanates such as tetrabutyl ortho-titanate or tetra(isopropyl) ortho-titanate, zirconium compounds, for example zirconates such as tetrabutyl ortho-zirconate or tetra(isopropyl) ortho-zirconate, Antimony compounds, Aluminium, for example Al-triisopropyl, and Zinc compounds and mixtures thereof.

With regard to organometallic esterification/transesterification catalysts of the type mentioned above, during the esterification/transesterification stage of the process described above they are present in concentrations of preferably between 12 and 120 ppm of metal relative to the amount of polyester that can theoretically be obtained by converting all the dicarboxylic acid fed to the reactor.

The catalyst for the esterification/transesterification step is a titanate, more preferably diisopropyl, triethanolamino titanate, preferably used in a concentration of 12-120 ppm of metal relative to a quantity of polyester that can theoretically be obtained by converting all of the dicarboxylic acid fed to the reactor.

Preferably, the reaction time for the esterification/transesterification step in the process according to the present invention is between 4 and 8 hours.

At the end of the esterification/transesterification step, an oligomer product having Mn <5000, an intrinsic viscosity of 0.05-0.15 dl/g, and an acidity < 150 meq/kg is obtained.

The catalyst may be fed to the polycondensation stage together with the oligomer product at the end of the esterification/transesterification stage.

The polycondensation step is conducted in the presence of a catalyst comprising titanium, possibly with zirconium or mixtures thereof, and a phosphorus-containing compound belonging to the family of organic phosphates or phosphites, with a total amount of 80-500 ppm of titanium, compared to the amount of polyester that could theoretically be obtained by converting all the dicarboxylic acid fed to the reactor in the catalyst. The ratio of Titanium to phosphorus is between 2 and 20, preferably between 3 and 15. If present, the total amount of Zirconium must be such that the Ti/(Ti+Zr) ratio is kept in the range 0.01-0.70.

In a preferred embodiment of the process for preparing the mixed aliphatic-aromatic polyesters according to the present invention the polycondensation catalyst comprising Titanium is a titanate advantageously selected from compounds having general formula Ti(OR)4 in which R is a ligand group comprising one or more atoms of Carbon, Oxygen, Phosphorus and/or Hydrogen.

Different ligand groups R may be present on the same titanium atom, but preferably they are identical to facilitate titanate preparation.

Furthermore, two or more ligands R may be derived from a single compound and may be chemically bonded together in addition to being bound by titanium (so-called multidentate ligands such as triethanolamine, citric acid, glycolic acid, malic acid, succinic acid, ethane diamine).

R is advantageously selected from the group comprising H, triethanolamine, citric acid, glycolic acid, malic acid, succinic acid, 3-oxobutanoic acid, ethane diamine and linear or branched C1-C12 alkyl residues such as, for example, ethyl, propyl, n-butyl, pentyl, isopropyl, isobutyl, isopentyl, hexyl, ethylhexyl. In a preferred embodiment, R is selected from C1-C12 alkyl residues, preferably C1-C8, more preferably n-butyl.

The preparation of titanates is well known in the literature. Typically, these are prepared by reacting titanium tetrachloride and a precursor alcohol of formula ROH in the presence of a base such as ammonia, or by the transesterification of other titanates.

Commercial examples of titanates that may in a preferred embodiment of the process be used to prepare the mixed aromatic-aliphatic polyesters according to the present invention include Tyzor® TPT (tetra isopropyl titanate), Tyzor® TnBT (tetra n-butyl titanate) and Tyzor® TE (diisopropyl triethanolamino titanate).

If the polycondensation catalyst comprising Zirconium is used in conjunction with the one comprising Titanium, this is a zirconate advantageously selected from compounds with the general formula Zr(OR)4 in which R is a ligand group comprising one or more atoms of Carbon, Oxygen, Phosphorus and/or Hydrogen.

As in the case of titanates, several different but preferably identical ligand groups R may be present on the same zirconate atom.

In addition to this, two or more ligands R may be derived from a single compound or may be chemically bound

together in addition to being bound by Zirconium (so-called multidentate ligands such as triethanolamine, citric acid, glycolic acid, malic acid, succinic acid, ethane diamine). R is advantageously selected from the group comprising H, triethanolamine, citric acid, glycolic acid, malic acid, succinic acid, 3-oxobutanoic acid, ethane diamine and linear or branched C1-C12 alkyl residues such as ethyl, propyl, n-butyl, pentyl, isopropyl, isobutyl, isopentyl, hexyl or ethylhexyl. In a preferred embodiment, R is selected from C1-C12, preferably C1-C8, alkyl residues, more preferably n-butyl.

The preparation of zirconates is known in the literature, and is similar to that described above for titanates.

Commercial examples of zirconates that can be used in the process to prepare mixed aromatic-aliphatic polyesters according to the present invention include Tyzor® NBZ (tetra n-butyl zirconate), Tyzor NPZ (tetra n-propyl zirconate), IG-NBZ (tetra n-butyl zirconate), Tytan TNBZ (tetra n-butyl zirconate), Tytan TNPZ (tetra n-propyl zirconate).

The polycondensation catalyst and phosphorus-containing compounds are fed to the polycondensation stage by feeding the various components separately to the reactor.

It is also possible to pre-mix some of the components and subsequently adjust the composition of the catalyst, for example when it is placed in contact with the oligomer product.

When a catalyst containing Titanium and/or Zirconium compounds is used in the esterification/transesterification step of the process to prepare mixed aromatic-aliphatic polyesters according to the present invention, in a preferred embodiment of the process according to the present invention this catalyst is not separated from the oligomer product and is fed to the polycondensation stage together with it and advantageously used as a polycondensation catalyst or as a component thereof, with possible adjustment of the molar ratio between Titanium and Zirconium by the addition of appropriate amounts of Titanium and Zirconium compounds to said polycondensation stage.

It is possible for the catalyst for the polycondensation stage to be the same as that for the esterification/transesterification stage.

The polycondensation stage is advantageously carried out by feeding the oligomer product to the polycondensation reactor and reacting it in the presence of the catalyst at a temperature of 220-260°C and a pressure of between 50 Pa (0.5 mbar) and 35000 Pa (350 mbar).

Preferably the reaction time for the polycondensation stage is between 4 and 8 hours. Depending on the specific molecular weight properties and the desired viscosity of the polyester, the process according to the present invention can provide for one or more stages of chain extension, reactive processing or reactive extrusion, including with other polymers, through the use of peroxides, divinyl ethers, bisoxazolines, polyepoxides, di- and polyisocyanates, carbodiimides or dianhydrides after the polycondensation stage.

The invention will now be illustrated by some embodiments which are intended to be illustrative and not limiting the scope of protection of this patent application.

## EXAMPLES

Example 1 (comparative) - Preparation of poly(1,4-butylene adipate-co-1,4-butylene sebacate-co-1,4-butylene succinate-co-1,4-butylene terephthalate) [PBTAdSebSuc 50/28/22] with 50% molar adipic acid, 28% molar sebacic acid and 22% molar succinic acid with respect to the sum of all the aliphatic carboxylic acids.

### Esterification stage

The following were loaded into a steel reactor having a geometric capacity of 60 litres, equipped with a mechanical stirring system, an inlet for nitrogen, a distillation column, a high-boiling distillate knock-down system and a connection to a high vacuum system, in a molar ratio of diol to dicarboxylic acid (MGR) of 1.50: 8004g of terephthalic acid, 3969g of adipic acid, 3075g of sebacic acid, 1411g of succinic acid, 113850g of 1,4-butanediol, 4.72g of glycerol and 5.50g of an 80% by weight ethanolic solution of diisopropyl triethanolamino titanate (Tyzor TE, corresponding to 21 ppm of metal with respect to the amount of PBTAdSebSuc theoretically obtainable by converting all the adipic acid, all the sebacic acid, all the succinic acid and all the terephthalic acid fed to the reactor).

The temperature of the mass was gradually raised to 230°C over a period of 120 minutes.

### Polycondensation phase

When at least 95% of the theoretical water had been distilled, 24.20g of tetra n-butyl titanate (corresponding to 154 ppm of metal relative to the amount of PBTAdSebSuc theoretically obtainable by converting all the adipic acid, all the sebacic acid, all the succinic acid and all the terephthalic acid fed to the reactor) and 5.39 g of trioctyl phosphate (corresponding to 17.5 ppm phosphorus relative to the amount of PBTAdSebSuc theoretically obtainable by converting all the adipic acid, all the sebacic acid, all the succinic acid and all the terephthalic acid fed to the reactor, thus corresponding to a Ti/P ratio of 10 by weight). The reactor temperature was then raised to 242°C and the pressure was gradually reduced to below 1.2 mbar over 60 minutes. The reaction was allowed to proceed for about 4.30 hours, the time required to obtain a

PBTAdSebSuc with an MFR of 4.3g/10 minutes (at 190°C and 2.16 kg), and the material was then discharged in the form of strings into a water bath and granulated.

Example 2 - Preparation of poly(1,4-butylene adipate-co-1,4-butylene azelaic acid-co-1,4-butylene succinate-co-1,4-butylene terephthalate) [PBTAdAzSuc 50/28/22] with 50% molar adipic acid, 28% molar azelaic acid and 22% molar succinic acid with respect to the sum of all the aliphatic carboxylic acids.

The operating conditions in Example 1 were repeated with the difference that 8082g of terephthalic acid, 4008g of adipic acid, 2890g of azelaic acid, 1425g of succinic acid, 13985g of 1,4-butanediol, 4.77g of glycerol and 5.50g of an 80% by weight ethanolic solution of diisopropyl triethanolamino titanate (Tyzor TE, corresponding to 21 ppm metal relative to the amount of PBTAdAzSuc theoretically obtainable by converting all the adipic acid, all the sebacic acid, all the succinic acid and all the terephthalic acid fed to the reactor) were loaded. PBTAdAzSuc was obtained with an MFR of 4.5g/10 min (at 190°C and 2.16 kg).

Example 3 - Preparation of poly(1,4-butylene adipate-co-1,4-butylene sebacate-co-1,4-butylene azelate-co-1,4-butylene succinate-co-1,4-butylene terephthalate) [PBTAdSebAzSuc 50/14/14/22] with 50% molar adipic acid, 14% molar sebacic acid, 14% molar azelaic acid and 22% molar succinic acid with respect to the sum of all the aliphatic carboxylic acids.

The operating conditions in Example 1 were repeated with the difference that 8043g of terephthalic acid, 3989g of adipic acid, 1545g of sebacic acid, 1438g of azelaic acid, 1418g of succinic acid, 13917g of 1,4-butanediol, 4.74g of glycerol and 5.50g of an 80% by weight ethanolic solution of diisopropyl triethanolamino titanate (Tyzor TE, corresponding to 21 ppm metal relative to the amount of PBTAdSebAzSuc theoretically obtainable by converting all the adipic acid, all the sebacic acid, all the azelaic acid, all the succinic acid and all the terephthalic acid fed to the reactor) were loaded. This yielded PBTAdSebAzSuc with an MFR of 4.6g/10 min (at 190°C and 2.16 kg).

Example 4 (comparative) - Preparation of poly(1,4-butylene sebacate-co-1,4-butylene succinate-co-1,4-butyleneterephthalate) [PBTSebSuc 50/50] with 50% molar sebacic acid and 50% molar succinic acid with respect to the sum of all the aliphatic carboxylic acids.

The operating conditions in Example 1 were repeated with the difference that in the Esterification stage 7916g of terephthalic acid, 5432g of sebacic acid, 3173g of succinic acid, 13698g of 1,4-butanediol, 4.67g of glycerol and 5.50g of an 80% by weight ethanolic solution of diisopropyl triethanolamino titanate (Tyzor TE, corresponding to 21 ppm of metal with respect to the amount of PBTSebSuc theoretically obtainable by converting all the sebacic acid, all the succinic acid and all the terephthalic acid fed to the reactor) were loaded. No trioctyl phosphate was added in the polycondensation step. PBTSebSuc was obtained with an MFR of 5.5 g/10 min (at 190°C and 2.16 kg).

Example 5 (comparative) - Preparation of poly(1,4-butylene azelaic acid-co-1,4-butylene succinate-co-1,4-butylene terephthalate) [PBTAzSuc 50/50] with 50% molar azelaic acid and 50% molar succinic acid with respect to the sum of all the aliphatic carboxylic acids.

The operating conditions in Example 1 were repeated with the difference that in the Esterification stage 8054g of terephthalic acid, 5143g of azelaic acid, 3228g of succinic acid, 13936g of 1,4-butanediol, 4.75g of glycerol and 5.50g of an 80% by weight ethanolic solution of diisopropyl triethanolamino titanate (Tyzor TE, corresponding to 21 ppm of metal with respect to the amount of PBTAzSuc theoretically obtainable by converting all the azelaic acid, all the succinic acid and all the terephthalic acid fed to the reactor) were added. No trioctyl phosphate was added in the polycondensation step. PBTAzSuc was obtained with an MFR of 6.0 g/10 min (at 190 °C and 2.16 kg).

Example 6 - Preparation of poly(1,4-butylene adipate-co-1,4-butylene azelaic acid-co-1,4-butylene succinate-co-1,4-butylene terephthalate) [PBTAdAzSuc 50/18.5/31.5] with 50% molar adipic acid, 18.5% molar azelaic acid and 31.5% molar succinic acid with respect to the sum of all the aliphatic carboxylic acids.

Esterification stage

The following were loaded into a steel reactor having a geometric capacity of 60 litres, equipped with a mechanical stirring system, an inlet for nitrogen, a distillation column, a high-boiling distillate knock-down system and a connection to a high vacuum system, in a molar ratio of diol to dicarboxylic acid (MGR) of 1.50: 8180g of terephthalic acid, 4133g of adipic acid, 2065g of azelaic acid, 1933g of succinic acid, 14153g of 1,4-butanediol, 4.82g of glycerol and 5.50g of an 80% by weight ethanolic solution of diisopropyl triethanolamino titanate (Tyzor TE, corresponding to 21 ppm of metal with respect to the amount of PBTAdAzSuc theoretically obtainable by converting all the adipic acid, all the azelaic acid, all the succinic acid and all the terephthalic acid fed to the reactor).

The temperature of the mass was gradually raised to 230°C over a period of 120 minutes.

Polycondensation phase

When at least 95% of the theoretical water had been distilled, 16.5g of tetra n-butyl titanate (corresponding to 105 ppm of metal relative to the amount of PBTAdAzSuc theoretically obtainable by converting all the adipic acid, all the azelaic

acid, all the succinic acid and all the terephthalic acid fed to the reactor) and 6.47 g of trioctyl phosphate (corresponding to 21 ppm phosphorus relative to the amount of PBTAdAzSuc theoretically obtainable by converting all the adipic acid, all the azelaic acid, all the succinic acid and all the terephthalic acid fed to the reactor, thus corresponding to a Ti/P ratio of 5 by weight). The reactor temperature was then raised to 257°C and the pressure was gradually reduced to below 1.2 mbar over 60 minutes. The reaction was allowed to proceed for about 4.30 hours, the time required to obtain a PBTAdAzSuc with an MFR of 6.0g/10 minutes (at 190°C and 2.16 kg), and the material was then discharged in the form of strings into a water bath and granulated.

Example 7 (comparative) - Preparation of poly(1,4-butylene sebacate-co-1,4-butylene azelate-co-1,4-butylene succinate-co-1,4-butylene terephthalate) [PBTSebAzSuc 33.3/33.3/33.3] with 40% molar terephthalic acid with respect the sum of all carboxylic acids and 33.3% molar sebacic acid, 33.3% molar azelaic acid and 33.3% molar succinic acid with respect to the sum of all the aliphatic carboxylic acids.

Esterification stage

The following were loaded into a glass reactor, equipped with a mechanical stirring system, an inlet for nitrogen, a distillation column, a high-boiling distillate knock-down system and a connection to a high vacuum system, in a molar ratio of diol to dicarboxylic acid (MGR) of 1: 44.82g of terephthalic acid, 27.27g of sebacic acid, 25.38g of azelaic acid, 15.93g of succinic acid, 121.50g of 1,4-butanediol, and 0.23g of tetrabutyltitanate (Tyzor TnBT, corresponding to 215 ppm of metal with respect to the amount of PBTSebAzSu theoretically obtainable by converting all the sebacic acid, all the azelaic acid, all the succinic acid and all the terephthalic acid fed to the reactor).

The temperature of the mass was kept to 190°C, 200°C and 210 °C for 1, 2 and 1 h respectively.

Polycondensation phase

The reactor temperature was then raised to 240°C and the pressure was gradually reduced to 2 mbar over 45 minutes. The reaction was allowed to proceed for about 4 hours, the time required to obtain a PBTSebAzSuc with an MFR of 5.7g/10 minutes (at 190°C and 2.16 kg), and the material was then discharged.

Table 1

| Example | Sample | DSC gradient Tg [°C] | Oligomers % | Ratio between mixed cyclic oligomers |
|---|---|---|---|---|
| Comparative Example 1 | Ad/Seb/Suc 50/28/22 | -30.1 | 3.6 | 1.15 |
| Example 2 | Ad/Az/Suc 50/28/22 | -34.9 | 2.1 | 0.84 |
| Example 3 | Ad/Seb/Az/Suc 50/14/14/22 | -35.8 | 2.3 | 0.93 |
| Comparative Example 4 | Seb/Suc 50/50 | -33.4 | 5.7 | 0.75 |
| Comparative Example 5 | Az/Suc 50/50 | -29.4 | 4.3 | 0.85 |
| Example 6 | Ad/Az/Suc 50/18.5/31.5 | -29.8 | 2.5 | 1.18 |
| Comparative Example 7 | Suc/Seb/Az 33.3/33.3/33.3 | -37.2 | 3.1 | 1.62 |

From the data in Table 1, comparing Example 2 with Comparative Example 1, it can be seen that when azelaic acid is in the presence of succinic acid and another saturated aliphatic dicarboxylic acid (adipic acid), the Tg of the mixed aliphatic-aromatic polyester is surprisingly lower than the Tg of the mixed aliphatic-aromatic polyester containing succinic acid and sebacic acid.

The effect has also been confirmed with four acids (Example 3), where azelaic acid and succinic acid are present.

The effect is even more surprising if we consider that this effect does not occur in the presence of only two saturated aliphatic dicarboxylic acids, consistent with what has been described in the literature (Comparative Example 4 vs. Comparative Example 5).

Comparative example 7 (prior art, Pan et al.) confirms that the combination of azelaic, succinic and sebacic acid shows a ratio between cyclic oligomers containing at least two types of dicarboxylic aliphatic units having MM lower than 1000 and cyclic oligomers containing only one type of dicarboxylic aliphatic unit lower than 1000 (Ratio between mixed cyclic oligomers) of 1.62, outside the present invention.

## Claims

1. Mixed aliphatic-aromatic polyesters comprising:

    a) a dicarboxylic component comprising:

        a1) 40-80% mol of units deriving from at least one aromatic dicarboxylic acid,
        a2) 20-60 % mol of units deriving from at least three saturated C4-C24 dicarboxylic acids, their alkyl ester C1-C24, their salts and mixtures thereof, azelaic acid and succinic acid being always present,

    b) a diol aliphatic component

        **characterized by** comprising a content of residual cyclic mixed oligomers defined as cyclic residual oligomers which remain in the polymer mass after the polycondensation process and having a molecular mass (MM) lower than 1000, wherein the content of said residual cyclic mixed oligomers measured by a gravimetric method as described in the description is comprised between 1.0% and 4.0% , in which said residual cyclic mixed oligomers are **characterized by** a ratio between cyclic oligomers containing at least two types of dicarboxylic aliphatic units having MM lower than 1000 and cyclic oligomers containing only one type of dicarboxylic aliphatic unit having MM lower than 1000 comprised between 0.30 and 1.40, more preferably between 0.40 and 1.20, even more preferably between 0,81 and 1,14, wherein the ratio is determined by the method described in the description that involves an HPLC-MS analysis, and further **characterized in that**
        the predominant saturated aliphatic dicarboxylic acid of component a2 is present in a greater molar percentage than the percentage of each of the other saturated aliphatic dicarboxylic acids and is comprised between 40% mol and 92% mol with respect to the sum of all the other saturated aliphatic dicarboxylic acids.

2. Mixed aliphatic-aromatic polyesters according to claim 1 in which the content of residual cyclic mixed oligomers is comprised between 2.0% and 3.5%.

3. Mixed aliphatic-aromatic polyesters according to any of the previous claims in which the diol aliphatic component b) comprises at least 50% mol of one or more diols selected from 1,2-ethandiol, 1-3-propanediol, 1,4-butanediol.

4. Mixed aliphatic-aromatic polyesters according to any of the previous claims in which the dicarboxylic component a) comprises 40-75%, more preferably 42-52% mol, even more preferably 45-49%mol of units deriving from at least an aromatic dicarboxylic acid (component a1) with respect to the total dicarboxylic component and 25-60%mol, more preferably 45-58% mol, even more preferably 51%-55% mol of units deriving from at least three saturated aliphatic dicarboxylic acids (component a2) with respect to the total dicarboxylic component.

5. Mixed aliphatic-aromatic polyesters according to any of the previous claims in which the molar % of saturated aliphatic dicarboxylic acids of renewal origin in component a2) is preferably equal or higher than 30%, more preferably higher than 40%, even more preferably higher than 50% with respect to the sum of the total saturated dicarboxylic acids.

6. Mixed aliphatic-aromatic polyesters according to any of the previous claims in which succinic acid of component a2) is further **characterized in that** it is comprised between 5% and 67% mol with respect to the sum of the total saturated dicarboxylic acids, preferably comprised between 10% and 50% mol, even more preferably comprised between 20% and 35% mol with respect to the sum of the total saturated dicarboxylic acids.

7. Mixed aliphatic-aromatic polyesters according to any of the previous claims in which azelaic acid of component a2) is preferably comprised between 3% and 92% mol more preferably comprised between 10% and 50% mol, even more preferably comprised between 15% and 35% mol with respect to the sum of the total saturated dicarboxylic acids.

8. Mixed aliphatic-aromatic polyesters according to any previous claims in which the saturated aliphatic dicarboxylic acids of component a2) are advantageously selected from saturated dicarboxylic acids C4-C24, preferably C4-C13, more preferably C4-C11, their alkyl esters C1-C24, preferably C1-C4, their salts and their mixtures thereof.

9. Mixed aliphatic-aromatic polyesters according to claim 8 in which the saturated aliphatic dicarboxylic acids of component a2) are advantageously selected from succinic acid, glutaric acid, 2-methylglutaric acid, adipic acid, pimelic acid, suberic acid, azelaic acid, sebacic acid, undecanoic acid, dodecanoic acid, brassylic acid, their alkyl

esters C1-C24.

**10.** Mixed aliphatic-aromatic polyesters according to any of the previous claims comprising repetitive units deriving from aromatic dicarboxylic acids of the phthalic acid type, preferably terephthalic acid, aromatic dicarboxylic acids and aliphatic diols (AAPE-A), **characterized by** a content of aromatic units between 42-52% mol, preferably 45-49% mol with respect to the total moles of the dicarboxylic component.

**11.** Mixed aliphatic-aromatic polyesters according to any of the previous claims comprising repetitive units deriving from 2,5-furandicarboxylic acid, aromatic dicarboxylic acids and aliphatic diols (AAPE-B), **characterized by** an aromatic units content of between 40-80% mol, preferably between 40-75% mol with respect to the total moles of the dicarboxylic component.

**12.** Mixed aliphatic-aromatic polyesters according to any of the previous claims comprising cyclic oligomers containing only a type of aliphatic dicarboxylic unit selected from:
(ADA-BDO)2,(AZA-BDO)2, (SEBA-BDO)2, (BRA-BDO)2, (SUC-BDO)2, (ADA-BDO)3, (AZA-BDO)3, (SEBA-BDO) 3, (BRA-BDO)3, (SUC-BDO)3, (ADA-BDO)4, (AZA- BDO)4, (SUC-BDO)4; in which ADA corresponds to the ester of adipic acid with the diol component, AZA corresponds to the ester of azelaic acid with the diol component, SUC corresponds to the ester of succinic acid with the diol component, SEBA corresponds to the ester of sebacic acid with the diol component, BRA corresponds to the ester of brassylic acid with the diol component, PTA corresponds to the ester of terephtalic acid and BDO is the diol component 1,4 butanediol.

**13.** Mixed aliphatic-aromatic polyesters according to any of the previous claims comprising cyclic oligomers containing at least two types of aliphatic dicarboxylic unit selected from:
(ADA-BDO-AZA-BDO), (ADA-BDO-SEBA-BDO), (ADA-BDO-BRA-BDO), (ADA-BDO-SUC-BDO), (AZA-BDO-SEBA-BDO), (AZA-BDO-BRA-BDO), (AZA- BDO-SUC-BDO), (SEBA-BDO-BRA-BDO), (SEBA-BDO-SUC-BDO), (SUC-BDO- BRA-BDO) (ADA-BDO)2-(AZA-BDO), (ADA-BDO)-(AZA-BDO)2, (ADA-BDO)2- (SEBA-BDO), (ADA-BDO)-(SEBA-BDO)2, (ADA-BDO)2-(BRA-BDO), (ADA- BDO)-(BRA-BDO)2, (ADA-BDO)2-(SUC-BDO), (ADA-BDO)-(SUC-BDO)2, (AZA- BDO)2-(SUC-BDO), (AZA-BDO)-(SUC-BDO)2, (SEB-BDO)2-(SUC-BDO), (SEB-BDO)-(SUC-BDO)2, (BRA-BDO)2-(SUC-BDO), (BRA-BDO)-(SUC-BDO)2, (AZA- BDO)2-(SEBA-BDO), (AZA-BDO)-(SEBA-BDO)2, (AZA-BDO)2-(BRA-BDO), (AZA-BDO)-(BRA-BDO)2, (SEBA-BDO)2-(BRA-BDO), (SEBA-BDO)-(BRA- BDO)2, (ADA-BDO)-(PTA-BDO)-(AZ-BDO), (ADA-BDO)-(PTA-BDO)-(SEBA- BDO), (ADA-BDO)-(PTA-BDO)-(BRA-BDO), (SEBA-BDO)-(PTA-BDO)-(AZ- BDO), (BRA-BDO)-(PTA-BDO)-(AZ-BDO), (BRA-BDO)-(PTA-BDO)-(SEBA- BDO), (ADA-BDO)-(PTA-BDO)-(SUC-BDO), (AZA-BDO)-(PTA-BDO)-(SUC- BDO), (SEB-BDO)-(PTA-BDO)-(SUC-BDO), (BRA-BDO)-(PTA-BDO)-(SUC- BDO), (ADA-BDO)-(AZA-BDO)-(SEBA-BDO), (ADA-BDO)-(AZA-BDO)-(BRA- BDO), (ADA-BDO)-(BRA-BDO)-(SEBA-BDO), (BRA-BDO)-(AZA-BDO)-(SEBA-BDO), (ADA-BDO)-(AZA-BDO)-(SUC-BDO), (SEBA-BDO)-(AZA-BDO)-(SUC-BDO), (BRA-BDO)-(AZA-BDO)-(SUC-BDO), (SEBA-BDO)-(BRA-BDO)-(SUC- BDO), (SEBA-BDO)-(ADA-BDO)-(SUC-BDO), (ADA-BDO) 2-(AZA-BDO)2, (ADA-BDO)2-(SEBA-BDO)2, (ADA-BDO)2-(BRA-BDO)2 in which ADA corresponds to the ester of adipic acid with the diol component, AZA corresponds to the ester of azelaic acid with the diol component, SUC corresponds to the ester of succinic acid with the diol component, SEBA corresponds to the ester of sebacic acid with the diol component, BRA corresponds to the ester of brassylic acid with the diol component, PTA corresponds to the ester of terephtalic acid and BDO is the diol component 1,4 butanediol.

**14.** Mixture of the mixed aliphatic-aromatic polyesters according to any of the previous claims with other biodegradable polymers both of synthetic origin and of natural one and eventually with polyhydroxyalkanoates, inorganic filler, cross-linking agents and/or chain extenders.

**15.** Film obtained with the mixtures of the mixed aliphatic-aromatic polyesters according to claim 14 which comprises:

i) 30-95% by weight of at least a mixed aliphatic-aromatic polyester with respect the sum of components i.-v.
ii) 0.1-50% by weight of at least a polymer of natural origin with respect to the sum of components i.-v.
iii) 0-40% by weight of at least a polyhydroxyalkanoate with respect to the sum of components i.-v.
iv) 0-15% by weight of at least an inorganic filler with respect to the sum of components i.-v.
v) 0-5% by weight of at least a cross-linking agents and/or chain extenders comprising at least a di and/or polyfunctional compound bearing isocyanate, peroxide, carbodiimide, isocyanurate, oxazoline, epoxide, anhydride, divinylether and mixtures thereof.

**16.** Products comprising the mixed aliphatic-aromatic polyesters according to claims from 1 to 13 selected from:

- films, with mono and bi-orientated films, and multi-layer films with other polymer materials;
- films for use in the agricultural sector as mulching films;
- stretch films including thin films for foodstuffs, for bales in agriculture and for the wrapping of wastes;
- bags and linings for the collection of organic materials such as the collection of food wastes and grass cuttings;
- thermoformed food packages, both single-layer and multi-layer, such as for example e containers for milk, yogurt, meat, beverages, etc;
- coatings obtained by the technique of extrusion coating;
- multi-layer laminates with layers of cardboard, plastic materials, aluminum, and metallized films;
- expanded or expandable beads for the production of parts formed by sintering;
- expanded and semi-expanded products including expanded blocks formed by pre-expanded particles;
- expanded sheets, thermoformed expanded sheets, containers from these obtained for food packaging;
- containers in general for fruit and vegetables
- compositions with gelatinized, destructured and/or complex starch, natural starch, flours, other fillers of natural, plant or inorganic origin as filler.

## Patentansprüche

**1.** Gemischte aliphatisch-aromatische Polyester, umfassend:

a) eine Dicarbonsäurekomponente, umfassend:

a1) 40-80 Mol-% Einheiten, abgeleitet von mindestens einer aromatischen Dicarbonsäure,
a2) 20-60 Mol-% Einheiten, abgeleitet von mindestens drei gesättigten C4-C24-Dicarbonsäuren, deren C1-C24-Alkylestern, deren Salzen und Mischungen davon, wobei immer Azelainsäure und Bernsteinsäure vorhanden sind,

b) eine aliphatische Diolkomponente,

**dadurch gekennzeichnet, dass** ein Gehalt an restlichen gemischten cyclischen Oligomeren, definiert als cyclische Restoligomere, die nach dem Polykondensationsprozess in der Polymermasse verbleiben und eine Molekülmasse (MM) von weniger als 1000 aufweisen,
wobei der Gehalt an diesen restlichen gemischten cyclischen Oligomeren, gemessen durch ein in der Beschreibung beschriebenes gravimetrisches Verfahren, zwischen 1,0% und 4,0% liegt, wobei die restlichen gemischten cyclischen Oligomere durch ein Verhältnis zwischen cyclischen Oligomeren, die mindestens zwei Arten von aliphatischen Dicarbonsäureeinheiten enthalten, die eine MM von weniger als 1000 aufweisen, und cyclischen Oligomeren, die nur eine Art von aliphatischen Dicarbonsäureeinheiten enthalten, die eine MM von weniger als 1000 aufweisen, von 0,30 bis 1,40, mehr bevorzugt zwischen 0,40 und 1,20, noch mehr bevorzugt zwischen 0,81 und 1,14, gekennzeichnet sind, wobei das Verhältnis durch das in der Beschreibung beschriebene Verfahren, umfassend eine HPLC-MS-Analyse, bestimmt wird,
und ferner **dadurch gekennzeichnet, dass**
die vorherrschende gesättigte aliphatische Dicarbonsäure der Komponente a2 zu einem größeren Molprozentsatz als der Prozentsatz jeder der anderen gesättigten aliphatischen Dicarbonsäuren vorliegt und zu 40 Mol-% bis 92 Mol-%, bezogen auf die Summe aller anderen gesättigten aliphatischen Dicarbonsäuren, umfasst ist.

**2.** Gemischte aliphatisch-aromatische Polyester gemäß Anspruch 1, wobei der Gehalt an restlichen gemischten cyclischen Oligomeren zwischen 2,0% und 3,5% liegt.

**3.** Gemischte aliphatisch-aromatische Polyester gemäß einem der vorhergehenden Ansprüche, wobei die aliphatische Diolkomponente b) mindestens 50 Mol-% eines oder mehrerer Diole umfasst, die aus 1,2-Ethandiol, 1,3-Propandiol und 1,4-Butandiol ausgewählt sind.

**4.** Gemischte aliphatisch-aromatische Polyester gemäß einem der vorhergehenden Ansprüche, wobei die Dicarbonsäurekomponente a) 40-75 Mol-%, mehr bevorzugt 42-52 Mol-%, noch mehr bevorzugt 45-49 Mol-%, Einheiten, abgeleitet von mindestens einer aromatischen Dicarbonsäure (Komponente a1), bezogen auf die gesamte Dicarbonsäurekomponente, und 25-60 Mol-%, mehr bevorzugt 45-58 Mol-%, noch mehr bevorzugt 51-55 Mol-%, Einheiten, abgeleitet von mindestens drei gesättigten aliphatischen Dicarbonsäuren (Komponente a2), bezogen auf die

gesamte Dicarbonsäurekomponente, umfasst.

5. Gemischte aliphatisch-aromatische Polyester gemäß einem der vorhergehenden Ansprüche, wobei die Mol-% der gesättigten aliphatischen Dicarbonsäuren erneuerbaren Ursprungs in Komponente a2) bevorzugt gleich oder größer als 30%, mehr bevorzugt größer als 40%, noch mehr bevorzugt größer als 50%, bezogen die Summe der gesamten gesättigten Dicarbonsäuren, sind.

6. Gemischte aliphatisch-aromatische Polyester gemäß einem der vorhergehenden Ansprüche, wobei Bernsteinsäure der Komponente a2) ferner **dadurch gekennzeichnet ist, dass** sie zu 5 bis 67 Mol-%, bezogen auf die Summe der gesamten gesättigten Dicarbonsäuren, bevorzugt zu 10 bis 50 Mol-%, mehr bevorzugt zu 20 bis 35 Mol-%, bezogen auf die Summe der gesamten gesättigten Dicarbonsäuren, umfasst ist.

7. Gemischte aliphatisch-aromatische Polyester gemäß einem der vorhergehenden Ansprüche, wobei Azelainsäure der Komponente a2) bevorzugt zu 3 bis 92 Mol-%, mehr bevorzugt zu 10 bis 50 Mol-%, noch mehr bevorzugt zu 15 bis 35 Mol-%, bezogen auf die Summe der gesamten gesättigten Dicarbonsäuren, umfasst ist.

8. Gemischte aliphatisch-aromatische Polyester gemäß einem der vorhergehenden Ansprüche, wobei die gesättigten aliphatischen Dicarbonsäuren der Komponente a2) vorteilhafterweise aus gesättigten Dicarbonsäuren C4-C24, bevorzugt C4-C13, mehr bevorzugt C4-C11, deren Alkylestern C1-C24, bevorzugt C1-C4, deren Salzen und Mischungen davon ausgewählt sind.

9. Gemischte aliphatisch-aromatische Polyester gemäß Anspruch 8, wobei die gesättigten aliphatischen Dicarbonsäuren der Komponente a2) vorteilhafterweise aus Bernsteinsäure, Glutarsäure, 2-Methylglutarsäure, Adipinsäure, Pimelinsäure, Suberinsäure, Azelainsäure, Sebacinsäure, Undecansäure, Dodecansäure, Brassylsäure, deren Alkylester C1-C24 ausgewählt sind.

10. Gemischte aliphatisch-aromatische Polyester gemäß einem der vorstehenden Ansprüche, umfassend Wiederholeinheiten, abgeleitet von aromatischen Dicarbonsäuren vom Phthalsäure-Typ, bevorzugt Terephthalsäure, aromatischen Dicarbonsäuren und aliphatischen Diolen (AAPE-A), **gekennzeichnet durch** einen Gehalt an aromatischen Einheiten zwischen 42-52 Mol-%, bevorzugt zwischen 45-49 Mol-%, bezogen auf die Gesamtmolzahl der Dicarbonsäurekomponente.

11. Gemischte aliphatisch-aromatische Polyester gemäß einem der vorhergehenden Ansprüche, umfassend Wiederholeinheiten, abgeleitet von 2,5-Furandicarbonsäure, aromatischen Dicarbonsäuren und aliphatischen Diolen (AAPE-B), **gekennzeichnet durch** einen Gehalt an aromatischen Einheiten zwischen 40-80 Mol-%, bevorzugt zwischen 40-75 Mol-%, bezogen auf die Gesamtmolzahl der Dicarbonsäurekomponente.

12. Gemischte aliphatisch-aromatische Polyester gemäß einem der vorhergehenden Ansprüche, umfassend cyclische Oligomere, die nur eine Art von aliphatischer Dicarbonsäureeinheit enthalten, ausgewählt aus: (ADA-BDO)2, (AZA-BDO)2, (SEBA-BDO)2, (BRA-BDO)2, (SUC-BDO)2, (ADA-BDO)3, (AZA-BDO)3, (SEBA-BDO) 3, (BRA-BDO)3, (SUC-BDO)3, (ADA-BDO)4, (AZA-BDO)4, (SUC-BDO)4; worin ADA dem Ester von Adipinsäure mit der Diolkomponente entspricht, AZA dem Ester von Azelainsäure mit der Diolkomponente entspricht, SUC dem Ester von Bernsteinsäure mit der Diolkomponente entspricht, SEBA dem Ester von Sebacinsäure mit der Diolkomponente entspricht, BRA dem Ester von Brassylsäure mit der Diolkomponente entspricht, PTA dem Ester von Terephthalsäure entspricht und BDO die Diolkomponente 1,4-Butandiol ist.

13. Gemischte aliphatisch-aromatische Polyester gemäß einem der vorhergehenden Ansprüche, umfassend cyclische Oligomere, die mindestens zwei Arten von aliphatischen Dicarbonsäureeinheiten enthalten, ausgewählt aus: (ADA-BDO-AZA-BDO), (ADA-BDO-SEBA-BDO), (ADA-BDO-BRA-BDO), (ADA-BDO-SUC-BDO), (AZA-BDO-SEBA-BDO), (AZA-BDO-BRA-BDO), (AZA-BDO-SUC-BDO), (SEBA-BDO-BRA-BDO), (SEBA-BDO-SUC-BDO), (SUC-BDO-BRA-BDO) (ADA-BDO)2-(AZA-BDO), (ADA-BDO)-(AZA-BDO)2, (ADA-BDO)2-(SEBA-BDO), (ADA-BDO)-(SEBA-BDO)2, (ADA-BDO)2-(BRA-BDO), (ADA-BDO)-(BRA-BDO)2, (ADA-BDO)2-(SUC-BDO), (ADA-BDO)-(SUC-BDO)2, (AZA- BDO)2-(SUC-BDO), (AZA-BDO)-(SUC-BDO)2, (SEB-BDO)2-(SUC-BDO), (SEB-BDO)-(SUC-BDO)2, (BRA-BDO)2-(SUC-BDO), (BRA-BDO)-(SUC-BDO)2, (AZA-BDO)2-(SEBA-BDO), (AZA-BDO)-(SEBA-BDO)2, (AZA-BDO)2-(BRA-BDO), (AZA-BDO)-(BRA-BDO)2, (SEBA-BDO)2-(BRA-BDO), (SEBA-BDO)-(BRA-BDO)2, (ADA-BDO)-(PTA-BDO)-(AZ-BDO), (ADA-BDO)-(PTA-BDO)-(SEBA-BDO), (ADA-BDO)-(PTA-BDO)-(BRA-BDO), (SEBA-BDO)-(PTA-BDO)-(AZ-BDO), (BRA-BDO)-(PTA-BDO)-(AZ-BDO), (BRA-BDO)-(PTA-BDO)-(SEBA-BDO), (ADA-BDO)-(PTA-BDO)-(SUC-BDO), (AZA-BDO)-(PTA-BDO)-(SUC-BDO), (SEB-BDO)-(PTA-BDO)-(SUC-BDO), (BRA-BDO)-(PTA-BDO)-(SUC-BDO), (ADA-BDO)-(AZA-BDO)-(SEBA-BDO), (ADA-BDO)-(AZA-BDO)-(BRA-BDO), (ADA-BDO)-(BRA-BDO)-(SEBA-BDO), (BRA-BDO)-(AZA-BDO)-(SEBA-BDO), (ADA-BDO)-(AZA-BDO)-(SUC-BDO), (SEBA-BDO)-(AZA-BDO)-(SUC-BDO), (BRA-BDO)-(AZA-BDO)-(SUC-BDO), (SEBA-BDO)-(BRA-BDO)-(SUC-BDO), (SEBA-BDO)-(ADA-BDO)-(SUC-BDO), (ADA-BDO) 2-(AZA-BDO)2, (ADA-BDO)2-(SEBA-BDO)2, (ADA-BDO)2-(BRA-BDO)2, worin ADA dem Ester von Adipinsäure mit der Diolkomponente entspricht, AZA dem Ester von Azelainsäure mit der Diolkomponente entspricht, SUC dem Ester von Bernsteinsäure mit der Diolkomponente, SEBA dem Ester von Sebacinsäure mit der Diolkomponente, BRA dem Ester von Brassylsäure mit der Diolkomponente entspricht, PTA dem Ester von Terephthalsäure entspricht und BDO die Diolkomponente 1,4-Butandiol ist.

**14.** Gemisch der gemischten aliphatisch-aromatischen Polyester gemäß einem der vorhergehenden Ansprüche mit anderen biologisch abbaubaren Polymeren, sowohl synthetischen als auch natürlichen Ursprungs, und optional mit Polyhydroxyalkanoaten, anorganischen Füllstoffen, Vernetzungsmitteln und/oder Kettenverlängerern.

**15.** Folie, erhalten mit dem Gemisch der gemischten aliphatisch-aromatischen Polyester gemäß Anspruch 14, umfassend:

i) 30-95 Gew.-% mindestens eines gemischten aliphatisch-aromatischen Polyesters, bezogen auf die Summe der Komponenten i.-v.
ii) 0,1-50 Gew.-% mindestens eines Polymers natürlichen Ursprungs, bezogen auf die Summe der Komponenten i.-v.
iii) 0-40 Gew.-% mindestens eines Polyhydroxyalkanoats, bezogen auf die Summe der Komponenten i.-v.
iv) 0-15 Gew.-% mindestens eines anorganischen Füllstoffs, bezogen auf die Summe der Komponenten i.-v.
v) 0-5 Gew.-% mindestens eines Vernetzungsmittels und/oder Kettenverlängerers, umfassend mindestens eine di- und/oder polyfunktionelle Verbindung, die Isocyanat, Peroxid, Carbodiimid, Isocyanurat, Oxazolin, Epoxid, Anhydrid, Divinylether und Mischungen trägt.

**16.** Produkte, umfassend die gemischten aliphatisch-aromatischen Polyester gemäß den Ansprüchen 1 bis 13, ausgewählt aus:

- Folien, mit mono- und biaxial orientierten Folien und Mehrschichtfolien mit anderen Polymermaterialien;
- Folien zur Verwendung im Agrarsektor als Mulchfolien;
- Stretchfolien, einschließlich dünner Folien für Lebensmittel, für Ballen in der Landwirtschaft und zum Verpacken von Abfällen;
- Beutel und Säcke für die Sammlung organischer Materialien, wie beispielsweise die Sammlung von Lebensmittelabfällen und Grasschnitt;
- thermogeformte Lebensmittelverpackungen, sowohl einlagig als auch mehrlagig, wie beispielsweise Behälter für Milch, Joghurt, Fleisch, Getränke usw.;
- Beschichtungen, erhalten durch die Technik der Extrusionsbeschichtung;
- Mehrschichtlaminate mit Schichten aus Pappe, Kunststoffmaterialien, Aluminium und metallisierten Folien;
- expandierte oder expandierbare Perlen für die Herstellung von Teilen, geformt durch Sintern;
- expandierte und halbexpandierte Produkte, einschließlich expandierter Blöcke, gebildet aus vorexpandierten Partikeln;
- expandierte Sheets, thermogeformte expandierte Sheets, daraus hergestellte Behälter für Lebensmittelverpackungen;
- Behälter für Obst und Gemüse im Allgemeinen
- Zusammensetzungen mit gelatinierter, destrukturierter und/oder komplexer Stärke, natürlicher Stärke, Mehlen, anderen Füllstoffen natürlichen, pflanzlichen oder anorganischen Ursprungs als Füllstoff.

## Revendications

**1.** Polyesters mixtes aliphatiques-aromatiques comprenant :

a) un composant dicarboxylique comprenant :

a1) 40 à 80 % en moles de motifs dérivant d'au moins un acide dicarboxylique aromatique,
a2) 20 à 60 % en moles de motifs dérivant d'au moins trois acides dicarboxyliques saturés en C4-C24, leur

ester d'alkyle en C1-C24, leurs sels et leurs mélanges, l'acide azélaïque et l'acide succinique étant toujours présents,

b) un composant aliphatique diol

**caractérisés en ce qu'**ils comprennent une teneur en oligomères mixtes cycliques résiduels définis comme oligomères résiduels cycliques qui restent dans la masse de polymère après le procédé de polycondensation et présentant une masse moléculaire (MM) inférieure à 1 000, dans lesquels la teneur desdits oligomères mixtes cycliques résiduels mesurée par un procédé gravimétrique tel que décrit dans la description est comprise entre 1,0 % et 4,0 %, dans lequel lesdits oligomères cycliques mixtes résiduels sont **caractérisés par** un rapport entre oligomères cycliques contenant au moins deux types de motifs aliphatiques dicarboxyliques ayant MM inférieur à 1 000 et oligomères cycliques contenant un seul type de motif aliphatique dicarboxylique ayant une MM inférieure à 1 000 compris entre 0,30 et 1,40, plus préférablement entre 0,40 et 1,20, encore plus préférablement entre 0,81 et 1,14, dans lesquels le rapport est déterminé par le procédé décrit dans la description impliquant une analyse HPLC-MS, et **caractérisés en outre en ce que** l'acide dicarboxylique aliphatique saturé majoritaire du composant a2 est présent en un pourcentage molaire supérieur au pourcentage de chacun des autres acides dicarboxyliques aliphatiques saturés et est compris entre 40 % en moles et 92 % en moles par rapport à la somme de tous les autres acides dicarboxyliques aliphatiques saturés.

**2.** Polyesters mixtes aliphatiques-aromatiques selon la revendication 1, dans lesquels la teneur en oligomères mixtes cycliques résiduels est comprise entre 2,0 % et 3,5 %.

**3.** Polyesters mixtes aliphatiques-aromatiques selon l'une quelconque des revendications précédentes, dans lesquels le composant aliphatique diol b) comprend au moins 50 % en moles d'un ou plusieurs diols choisis parmi le 1,2-éthandiol, le 1-3-propanediol, le 1,4-butanediol.

**4.** Polyesters mixtes aliphatiques-aromatiques selon l'une quelconque des revendications précédentes, dans lesquels le composant dicarboxylique a) comprend 40 à 75 %, plus préférablement 42 à 52 % en moles, encore plus préférablement 45 à 49 % en moles de motifs dérivant d'au moins un acide dicarboxylique aromatique (composant a1) par rapport au composant dicarboxylique total et 25 à 60 % en moles, plus préférablement 45 à 58 % en moles, encore plus préférablement 51 à 55 % en moles de motifs dérivant d'au moins trois acides dicarboxyliques aliphatiques saturés (composant a2) par rapport au composant dicarboxylique total.

**5.** Polyesters mixtes aliphatiques-aromatiques selon l'une quelconque des revendications précédentes, dans lesquels le pourcentage molaire d'acides dicarboxyliques aliphatiques saturés d'origine de renouvellement dans le composant a2) est de préférence égal ou supérieur à 30 %, plus préférablement supérieur à 40 %, encore plus préférablement supérieur à 50 % par rapport à la somme des acides dicarboxyliques saturés totaux.

**6.** Polyesters mixtes aliphatiques-aromatiques selon l'une quelconque des revendications précédentes, dans lesquels l'acide succinique du composant a2) est en outre **caractérisé en ce qu'**il est compris entre 5 % et 67 % en moles par rapport à la somme des acides dicarboxyliques saturés totaux, de préférence compris entre 10 % et 50 % en moles, encore plus préférablement compris entre 20 % et 35 % en moles par rapport à la somme des acides dicarboxyliques saturés totaux.

**7.** Polyesters mixtes aliphatiques-aromatiques selon l'une quelconque des revendications précédentes, dans lesquels l'acide azélaïque du composant a2) est de préférence compris entre 3 % et 92 % en moles, plus préférablement compris entre 10 % et 50 % en moles, encore plus préférablement compris entre 15 % et 35 % en moles par rapport à la somme des acides dicarboxyliques saturés totaux.

**8.** Polyesters mixtes aliphatiques-aromatiques selon l'une quelconque des revendications précédentes, dans lesquels les acides dicarboxyliques aliphatiques saturés du composant a2) sont avantageusement choisis parmi les acides dicarboxyliques saturés en C4-C24, de préférence en C4-C13, plus préférablement en C4-C11, leurs esters d'alkyle en C1-C24, de préférence en C1-C4, leurs sels et leurs mélanges.

**9.** Polyesters mixtes aliphatiques-aromatiques selon la revendication 8, dans lesquels les acides dicarboxyliques aliphatiques saturés du composant a2) sont avantageusement choisis parmi l'acide succinique, l'acide glutarique, l'acide 2-méthylglutarique, l'acide adipique, l'acide pimélique, l'acide subérique, l'acide azélaïque, l'acide sébacique, l'acide undécanoïque, l'acide dodécanoïque, l'acide brassylique, leurs esters d'alkyle en C1-C24.

**10.** Polyesters mixtes aliphatiques-aromatiques selon l'une quelconque des revendications précédentes, comprenant des motifs répétitifs dérivant d'acides dicarboxyliques aromatiques du type acide phtalique, de préférence l'acide téréphtalique, des acides dicarboxyliques aromatiques et des diols aliphatiques (AAPE-A), **caractérisés par** une teneur en motifs aromatiques entre 42 à 52 % en moles, de préférence 45 à 49 % en moles par rapport aux moles totales du composant dicarboxylique.

**11.** Polyesters mixtes aliphatiques-aromatiques selon l'une quelconque des revendications précédentes, comprenant des motifs répétitifs dérivant d'acide 2,5-furanedicarboxylique, d'acides dicarboxyliques aromatiques et de diols aliphatiques (AAPE-B), **caractérisés par** une teneur en motifs aromatiques comprise entre 40 à 80 % en moles, de préférence entre 40 à 75 % en moles par rapport aux moles totales du composant dicarboxylique.

**12.** Polyesters mixtes aliphatiques-aromatiques selon l'une quelconque des revendications précédentes, comprenant des oligomères cycliques contenant seulement un type de motif dicarboxylique aliphatique choisi parmi : (ADA-BDO)2, (AZA-BDO)2, (SEBA-BDO)2, (BRA-BDO)2, (SUC-BDO)2, (ADA-BDO)3, (AZA-BDO)3, (SEBA-BDO)3, (BRA-BDO)3, (SUC-BDO)3, (ADA-BDO)4, (AZA-BDO)4, (SUC-BDO)4 ; dans lesquels ADA correspond à l'ester d'acide adipique avec le composant diol, AZA correspond à l'ester d'acide azélaïque avec le composant diol, SUC correspond à l'ester d'acide succinique avec le composant diol, SEBA correspond à l'ester d'acide sébacique avec le composant diol, BRA correspond à l'ester d'acide brassylique avec le composant diol, PTA correspond à l'ester d'acide téréphtalique et BDO est le composant diol 1,4 butanediol.

**13.** Polyesters mixtes aliphatiques-aromatiques selon l'une quelconque des revendications précédentes comprenant des oligomères cycliques contenant au moins deux types de motifs dicarboxyliques aliphatiques choisis parmi : (ADA-BDO-AZA-BDO), (ADA-BDO-SEBA-BDO), (ADA-BDO-BRA-BDO), (ADA-BDO-SUC-BDO), (AZA-BDO-SEBA-BDO), (AZA-BDO-BRA-BDO), (AZA-BDO-SUC-BDO), (SEBA-BDO-BRA-BDO), (SEBA-BDO-SUC-BDO), (SUC-BDO-BRA-BDO), (ADA-BDO)2-(AZA-BDO), (ADA-BDO)-(AZA-BDO)2, (ADA-BDO)2-(SEBA-BDO), (ADA-BDO)-(SEBA-BDO)2, (ADA-BDO)2-(BRA-BDO), (ADA-BDO)-(BRA-BDO)2, (ADA-BDO)2-(SUC-BDO), (ADA-BDO)-(SUC-BDO)2, (AZA-BDO)2-(SUC-BDO), (AZA-BDO)-(SUC-BDO)2, (SEB-BDO)2-(SUC-BDO), (SEB-BDO)-(SUC-BDO)2, (BRA-BDO)2-(SUC-BDO), (BRA-BDO)-(SUC-BDO)2, (AZA-BDO)2-(SEBA-BDO), (AZA-BDO)-(SEBA-BDO)2, (AZA-BDO)2-(BRA-BDO), (AZA-BDO)-(BRA-BDO)2, (SEBA-BDO)2-(BRA-BDO), (SEBA-BDO)-(BRA-BDO)2, (ADA-BDO)-(PTA-BDO)-(AZ-BDO), (ADA-BDO)-(PTA-BDO)-(SEBA-BDO), (ADA-BDO)-(PTA-BDO)-(BRA-BDO), (SEBA-BDO)-(PTA-BDO)-(AZ-BDO), (BRA-BDO)-(PTA-BDO)-(AZ-BDO), (BRA-BDO)-(PTA-BDO)-(SEBA-BDO), (ADA-BDO)-(PTA-BDO)-(SUC-BDO), (AZA-BDO)-(PTA-BDO)-(SUC-BDO), (SEB-BDO)-(PTA-BDO)-(SUC-BDO), (BRA-BDO)-(PTA-BDO)-(SUC-BDO), (ADA-BDO)-(AZA-BDO)-(SEBA-BDO), (ADA-BDO)-(AZA-BDO)-(BRA-BDO), (ADA-BDO)-(BRA-BDO)-(SEBA-BDO), (BRA-BDO)-(AZA-BDO)-(SEBA-BDO), (ADA-BDO)-(AZA-BDO)-(SUC-BDO), (SEBA-BDO)-(AZA-BDO)-(SUC-BDO), (BRA-BDO)-(AZA-BDO)-(SUC-BDO), (SEBA-BDO)-(BRA-BDO)-(SUC-BDO), (SEBA-BDO)-(ADA-BDO)-(SUC-BDO), (ADA-BDO)2-(AZA-BDO)2, (ADA-BDO)2-(SEBA-BDO)2, (ADA-BDO)2-(BRA-BDO)2, dans lesquels ADA correspond à l'ester d'acide adipique avec le composant diol, AZA correspond à l'ester d'acide azélaïque avec le composant diol, SUC correspond à l'ester d'acide succinique avec le composant diol, SEBA correspond à l'ester d'acide sébacique avec le composant diol, BRA correspond à l'ester d'acide brassylique avec le composant diol, PTA correspond à l'ester d'acide téréphtalique et BDO est le composant diol 1,4 butanediol.

**14.** Mélange de polyesters aliphatiques-aromatiques mélangés selon l'une quelconque des revendications précédentes avec d'autres polymères biodégradables, à la fois d'origine synthétique et naturelle et éventuellement avec des polyhydroxyalcanoates, une charge inorganique, des agents de réticulation et/ou des extenseurs de chaîne.

**15.** Film obtenu avec les mélanges des polyesters mixtes aliphatiques-aromatiques selon la revendication 14 qui comprend :

i) 30 à 95 % en poids d'au moins un polyester mixte aliphatique-aromatique par rapport à la somme des composants i.-v.
ii) 0,1 à 50 % en poids d'au moins un polymère d'origine naturelle par rapport à la somme des composants i.-v.
iii) 0 à 40 % en poids d'au moins un polyhydroxyalcanoate par rapport à la somme des composants i.-v.
iv) 0 à 15 % en poids d'au moins une charge inorganique par rapport à la somme des composants i.-v.
v) 0 à 5 % en poids d'au moins des agents de réticulation et/ou des extenseurs de chaînes comprenant au moins un composé difonctionnel et/ou polyfonctionnel portant isocyanate, peroxyde, carbodiimide, isocyanurate, oxazoline, époxyde, anhydride, divinyléther et leurs mélanges.

**16.** Produits comprenant les polyesters mixtes aliphatiques-aromatiques selon les revendications 1 à 13 choisis parmi :

- les films, avec films mono-orientés et bi-orientés, et les films multicouches avec d'autres matériaux de polymère ;
- les films destinés à être utilisés dans le secteur agricole comme films de paillage ;
- les films étirables, y compris les films minces pour les denrées alimentaires, pour les balles en agriculture et pour l'emballage des déchets ;
- les sacs et doublures pour la collecte de matières organiques telles que la collecte de déchets alimentaires et d'herbe coupée ;
- les emballages alimentaires thermoformés, à la fois monocouches et multicouches, tels que par exemple des récipients pour lait, yaourt, viande, boissons, etc ;
- les revêtements obtenus par la technique de revêtement par extrusion ;
- les stratifiés multicouches comportant des couches de carton, de matières plastiques, d'aluminium et de films métallisés ;
- les billes expansées ou expansibles pour la réalisation de pièces formées par frittage ;
- les produits expansés et semi-expansés incluant des blocs expansés formés par des particules pré-expansées ;
- les feuilles expansées, feuilles expansées thermoformées, récipients obtenus à partir de celles-ci pour l'emballage alimentaire ;
- les récipients en général pour fruits et légumes ;
- les compositions avec de l'amidon gélatinisé, déstructuré et/ou complexe, amidon naturel, farines, autres charges d'origine naturelle, végétale ou inorganiques comme charge.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3240818 B1
- WO 2020216803 A1
- WO 2016050963 A
- EP 0118240 A
- EP 0327505 A


### Non-patent literature cited in the description


- **PAN et al.** Effect of Monomer Structure on Crystallisation and Glass Transition of Flexible Copolyesters. *J. Polym. Environ.*, 2017, vol. 25, 1051-1061